# EUROPÄISCHE PATENTSCHRIFT

(11) **EP 2 430 822 B1**
(45) Veröffentlichungstag und Bekanntmachung des Hinweises auf die Patenterteilung: **19.09.2012**
(21) Anmeldenummer: 10721000.7
(22) Anmeldetag: 14.05.2010
(51) Int. Cl.: H04M 3/42

(54) **GESPRÄCHSRICHTENDES VERMITTLUNGSSYSTEM FÜR DIE OPTIMIERUNG DER GESPRÄCHSVERMITTLUNG ZWISCHEN VERSCHIEDENEN TELEKOMMUNIKATIONSNETZEN**
CALL CORRECTING RELAY SYSTEM FOR OPTIMIZING CALL RELAYING BETWEEN DIFFERENT TELECOMMUNICATION NETWORKS
SYSTÈME DE COMMUTATION À ORIENTATION DES APPELS PERMETTANT D'OPTIMISER LA COMMUTATION D'UN APPEL ENTRE DIFFÉRENTS RÉSEAUX DE TÉLÉCOMMUNICATION

(30) Priorität: 14.05.2009 DE 202009006953 U
(43) Veröffentlichungstag der Anmeldung: 21.03.2012
(73) Patentinhaber: Trinity Holding AG, 6341 Baar (CH)
(72) Erfinder: Boehnke, Norbert, 81829 München (DE)
(74) Vertreter: Grünecker, Kinkeldey, Stockmair & Schwanhäusser
(86) Internationale Anmeldenummer: PCT/EP2010/002988
(87) Internationale Veröffentlichungsnummer: WO 2010/130463

(56) Entgegenhaltungen:
- EP-A2- 0 910 199
- DE-A1- 10 309 578
- US-A1- 2009 023 427
- US-B1- 7 096 043

## Beschreibung

Grundsätzlich bezieht sich die vorliegende Erfindung auf ein computerimplementiertes System zur gesprächsrichtenden Vermittlung von Telekommunikationsverbindungen von einem mobilen Telekommunikationsendgerät zu einem weiteren mobilen Telekommunikationsendgerät, wobei die Telekommunikationsendgeräte jeweils in verschiedenen Telekommunikationsnetzen registriert sind, unter Anwendung Software-Komponenten, die auf den Telekommunikationsendgeräten installiert sind und eines zentralen bzw. neutralen Festnetzservers der ein gesprächsrichtendes Optimierungsverfahren bereitstellt.

Für die Sprachkommunikation wurden traditionell Festnetze benutzt, bei denen Gespräche über fest installierte Endgeräte und leitungsbasierte Netzwerke hergestellt wurden. Heute jedoch werden diese traditionellen Möglichkeiten ergänzt, um flexiblere und anwendungsfreundlichere Gesprächsvermittlungen über Mobilfunk oder auch Satellitennetzwerke. Diese mobilen Netzwerke für die Telekommunikation haben für den Endnutzer den Vorteil, dass das Telekommunikationsendgerät, z.B. ein Telefon, nicht mehr an eine fest installierte Leitung gebunden ist, sondern überall und zu jeder Zeit mitgeführt und genutzt werden kann.

Für den Aufbau dieser Mobilfunknetze waren signifikante Investitionen notwendig, was zu signifikant höheren Gesprächskosten bei der Vermittlung von Gesprächen über Mobilfunknetze, im Vergleich zu einer Vermittlung von Gesprächen über (traditionellere) Festnetze führt. Dies trifft insbesondere dann zu, wenn Gespräche von einem mobilen Endgerät zu einem anderen mobilen Endgerät terminiert werden sollen und beide mobilen Endgeräte in jeweils unterschiedlichen Netzwerken bei unterschiedlichen Netzwerkbetreibern registriert sind.

Beispielsweise sind für die Telekommunikation in Festnetzen heute bereits sog. "Flatrates" bekannt, die für einen festen Betrag pro Zeit (z.B. pro Monat) ein unendlich großes Zeitbudget für die Gesprächsführung bieten. Ähnliche kosteneffiziente Konditionen sind dagegen für die Telekommunikation in Mobilfunknetzen bzw. die Terminierung von Gesprächen zwischen Mobilnetzen unbekannt, da hier von den jeweiligen Mobilfunkbetreibern signifikant höhere Kosten für die Herstellung einer Verbindung zu einem "mobilen" Nutzer in Rechnung gestellt werden.

Obwohl auch ein von einem mobilen Telekommunikationsendgerät abgehendes Gespräch häufig bereits nach einem kurzen Teil der Übertragungsstrecke auf eine Festnetzinfrastruktur geschaltet wird, werden dem Endnutzer dieses Telekommunikationsendgerätes dennoch "mobile", d.h. signifikant höhere Vermittlungspreise in Rechnung gestellt, insbesondere dann, wenn eine Verbindung von einem mobilen Telekommunikationsendgerät zu einem weiteren mobilen Telekommunikationsendgerät bereitgestellt wird.

Dies trifft insbesondere in den Fällen zu, in denen die mobilen Kommunikationsendgeräte bei Betreibern unterschiedlicher Mobilfunknetze registriert sind, sodass in diesem Fall für die Vermittlung der Gespräche zwischen diesen beiden Telekommunikationsendgeräten der eine Mobilfunknetzbetreiber dem jeweils anderen Mobilfunknetzbetreiber eine entsprechend hohe Vermittlungsgebühr für die Terminierung der Verbindung in Rechnung stellt.

Dieses Problem verschärft sich weiter dann, wenn statt eines weiteren Mobilfunkendgerätes sog. Mehrwertdienste oder Servicerufnummern von einem mobilen Telekommunikationsendgerät aus angewählt werden. Hier können - möglicherweise unbeabsichtigt - enorm hohe Vermittlungs- bzw. Servicegebühren anfallen.

Besonders problematische ist dies für Organisationen, die ihren Mitgliedern Telekommunikationsendgeräte zur dienstlichen Nutzung überlassen. Wenn z.B. in einer Firma ein Dienstapparat zur Verfügung gestellt wird, werden alle Gespräche von diesem Apparat üblicherweise über eine zentrale Telefonanlage dieser Firma geroutet sodass die Firma für jeden dieser Apparate die Möglichkeit hat zu kontrollieren, welche Gespräche bzw. Zielrufnummern angewählt werden können - und welchen nicht. So kann die Firma für diese Festnetzapparate jederzeit eine Kostenkontrolle durchführen und über Berechtigungsstufen (z.B. Auslandsgespräche erlaubt oder nicht erlaubt) eine sehr fein gegliederte Kosten- und Berechtigungskontrolle gewährleisten.

Für Mobiltelefone ist jedoch eine ähnliche Kontrolle durch Organisationen bzw. Firmen nicht möglich. Hier wird der Anruf nicht über eine firmen-zentrale Einheit gesteuert, sondern führt direkt vom mobilen Endgerät in das Netz des jeweiligen Mobilfunkbetreibers und wird von dort zu der Zielnummer in das für diese Rufnummer relevante Netz terminiert. Möglicherweise auch unbeabsichtigter Missbrauch kann daher von Firmen nicht präventiv verhindert werden und insbesondere kann von einer Firma kein gestuftes Berechtigungskonzept bezüglich der Zielrufnummern, die erlaubt - bzw. nicht erlaubt sind - umgesetzt werden.

Weiter ist bekannt aus DE 103 09 578 A1 ein Verfahren zur Herstellung oder Bereitstellung einer Telefonverbindung unter Verwendung eines Telefonieservers, der zum Aufbau einer Telefonverbindung in der Lage ist und für einen hierzu berechtigten Benutzer Telefoniefunktionalitäten bereitstellt. Hier wird beschrieben, dass (a) ein Rufsignal vom Benutzer an den Telefonieserver gesendet wird; (b) der Benutzers durch den Telefonieserver identifiziert wird, um festzustellen ob der Benutzer für die Telefoniefunktionalität berechtigt ist; (c) falls die Überprüfung ergibt, dass der Benutzer berechtigt ist, erfolgt der Aufbau einer Verbindung, ausgehend vom Telefonieserver zu dem Benutzer, um dem Benutzer eine Auswahl von Telefoniefunktionalitäten bereitzustellen, zu deren Abwicklung der Telefonieserver in der Lage ist.

Weiterhin ist bekannt aus US 7,096,043 B1 ein Verfahren für die selektive Blockade abgehender Anrufe basieren auf Sperrkriterien, die durch einen Telefonieteilnehmer oder dessen Vertreter konfiguriert sind. Wenn ein Anruf eingeleitet wird, werden Sperrkriterien verwendet, welche mit dem Telefoniegerät assoziiert sind von welchem der Anruf eingeleitet wird, um festzustellen, ob der Anruf gesperrt werden sollen oder fortgesetzt werden darf. Sobald eine solche Feststellung getroffen wird, blockiert oder erlaubt ein das Telefonierendgerät unterstützender Telefonie-Switch oder Telefonier-Server den Anruf wie festgelegt in den Sperrkriterien. Die Sperrkriterien können für ein oder mehrere Telefonie-Endgeräte angewandt werden. Die Sperrkriterien können vom Telefonierteilnehmer oder dessen Vertreter einfach und effizient konfiguriert werden.

Daher besteht Bedarf für ein gesprächsrichtendes Vermittlungssystem, das die Vermittlung von Gesprächen zwischen Telekommunikationsnetzen verschiedener Betreiber optimiert.

Diese Aufgabe wird gelöst durch den beanspruchten Gegenstand der unabhängigen Ansprüche.

Bevorzugte Ausführungsformen sind Gegenstand der abhängigen Ansprüche.

Gemäß einem Aspekt der vorliegenden Erfindung wird diese Aufgabe durch ein System zur gesprächsrichtenden Vermittlung von Gesprächen zwischen mindestens zwei Telekommunikationsendgeräten, wobei die Telekommunikationsendgeräte jeweils in verschiedenen Telekommunikationsnetzen registriert sind, gelöst. Das System umfasst mindestens zwei Telekommunikationsendgeräte, von denen jedes eine Software-Komponente aufweist, die auf dem jeweiligen Telekommunikationsendgerät gespeichert und installiert ist. Diese Software-Komponente ist dafür eingerichtet, von dem Telekommunikationsendgerät, beispielsweise einem Mobiltelefon, ausgehende Gesprächsanfragen zu initialisieren und bei der Initialisierung einer ausgehenden Gesprächsanfrage über eine hergestellte Kommunikationsverbindung Informationen über eine gewünschte Zielrufnummer zu übergeben. Insbesondere ist diese Software-Komponente weiter dafür eingerichtet, auf dem Telekommunikationsendgerät eintreffende Gesprächsanfragen bezüglich der Identität der anrufenden Stelle zu analysieren und auf Basis der Identitätsanalyse Gesprächsanfragen abzulehnen bzw. zu unterbrechen und eine von dem Telekommunikationsgerät ausgehende Gesprächsanfrage zu initialisieren.

Weiter umfasst das System mindestens einen Festnetzserver, der mindestens eine Switching-Komponente aufweist sowie auch Einrichtungen aufweist, die Interconnection-Funktionalitäten bereitstellen, sodass dieser Festnetzserver als ein neutrales Telekommunikationsnetz installiert ist und ein solches Telekommunikationsnetz auch gegenüber anderen Telekommunikationsnetzen konstituiert und repräsentiert.

Weiter umfasst dieses System softwareimplementierte Einrichtungen, die auf dem Festnetzserver gespeichert und installiert sind. Diese softwareimplementierten Einrichtungen sind so eingerichtet, dass eine am Festnetzserver eintreffenden Gesprächsanfrage von einem ersten Telekommunikationsendgerät hinsichtlich der Identität des anfragenden Telekommunikationsendgerätes analysiert wird, in Reaktion auf diese Identitätsanalyse eine Verbindung zu dem anfragenden Telekommunikationsendgerät aufgebaut wird und auf Basis der Identitätsanalyse unter der hergestellten Verbindung eine gewünschte Telekommunikationsverbindung zu einem zweiten Telekommunikationsendgerät hergestellt wird.

Der vorliegenden Erfindung liegt somit unter anderem die Erkenntnis zugrunde, dass für die Vermittlung eines Gesprächs von einem ersten Telekommunikationsendgerät, das in einem ersten Telekommunikationsnetz registriert ist, zu einem zweiten Telekommunikationsendgerät, das in einem zweiten, davon unterschiedlichen Telekommunikationsnetz registriert ist, eine Terminierung dieses Gespräches von dem ersten Netzbetreiber des ersten Telekommunikationsnetzes zu dem zweiten Netzbetreiber des anderen, zweiten Telekommunikationsnetzwerkes hergestellt werden muss. Weiter liegt der vorliegenden Erfindung die Erkenntnis zugrunde, dass für diese Terminierung vergleichsweise hohe Kosten anfallen, wenn es sich bei den ersten und zweiten Telekommunikationsnetzwerken insbesondere um mobile Telekommunikationsnetzwerke, Mobiltelefonnetzwerk z.B., handelt oder zumindest das zweite Telekommunikationsnetzwerk von einem Mehrwertdienstleister oder Teledienstleister zur Verfügung gestellt bzw. betrieben wird.

Der vorliegenden Erfindung liegt somit auch die Erkenntnis zugrunde, dass für diese Terminierung von Gesprächen zwischen Telekommunikationsendgeräten, z.B. Telefonen oder Mobiltelefonen, die in verschiedenen Telekommunikationsnetzen registriert sind, eine Kontrolle und idealerweise Reduzierung der auftretenden Terminierungskosten wünschenswert wäre. Diese Erkenntnis ist insbesondere daher begründet, dass z.B. für den Fall, dass die Telekommunikationsendgeräte von einer Organisation, z.B. einer Firma, als dienstliche Telefone ausgegeben werden, die ausgebende Stelle, d. h. die Firma, ein wirtschaftliches Interesse an der effizienten Nutzung dieser dienstlich zu nutzenden Telekommunikationsendgeräte hat. Es ist daher für eine solche Firma wünschenswert, die effiziente und wirtschaftliche Nutzung dieser Telekommunikationsendgeräte zu kontrollieren und weiter insbesondere beabsichtigten oder auch unbeabsichtigten Missbrauch zu vermeiden.

Daher wird die vorliegende Aufgabe gemäß einem weiteren Aspekt der vorliegenden Erfindung löst durch einen Festnetzserver, der eine oder mehrere Komponenten umfasst, die Interconnection-Funktionalität bereitstellen, sodass der Server als ein eigenständiges, neutrales Kommunikationsnetz arbeitet und damit Switching- und Connectivity-Merkmale bereitstellt, sodass dieser Festnetzserver ein neutrales Festnetztelekommunikationsnetz gegenüber anderen Telekommunikationsnetzen repräsentiert und ein solches konstituiert. Weiter umfasst der Festnetzserver mindestens eine Switching-Komponente, die dafür eingerichtet ist, mindestens zwei Verbindungen, die von einem ersten und einem zweiten Telekommunikationsendgerät zu dem Festnetzserver bestehen, zu einer Verbindung zusammenzuschalten, sodass eine Telekommunikationsverbindung zwischen dem ersten und dem zweiten Telekommunikationsendgerät, und insbesondere nur eine gewünschte Telekommunikationsverbindung zwischen dem ersten und einem zweiten Telekommunikationsendgerät hergestellt wird.

Weiter weist dieser Festnetzserver softwareimplementierte Einrichtungen auf, die so eingerichtet sind, dass eine an den Festnetzserver eintreffende Gesprächsanfrage von dem ersten Telekommunikationsendgerät hinsichtlich der Identität dieses anfragenden Telekommunikationsendgerätes analysiert wird, in Reaktion auf diese Identitätsanalyse eine Verbindung zu dem anfragenden Telekommunikationsendgerät aufgebaut wird und auf Basis der Identitätsanalyse und der hergestellten Verbindung die gewünschte Telekommunikationsverbindung zu dem zweiten Telekommunikationsendgerät hergestellt wird.

Somit bietet dieser Aspekt der vorliegenden Erfindung dem Anwender insbesondere den Nutzen, dass über den Festnetzserver ausschließlich gewünschte Telekommunikationsverbindungen zwischen zwei Telekommunikationsendgeräten aufgebaut werden. Daher liegt der vorliegenden Erfindung auch weiter die Erkenntnis zugrunde, dass nach Eingabe einer Zielrufnummer an einem ersten Telekommunikationsendgerät eine Prüfung dahingehend wünschenswert sein kann, ob die Rufnummer dieses Gesprächswunsches z.B. zu einer Liste von erlaubten Rufnummern gehört ("white list") oder ob diese Rufnummer zu einer Liste von verbotenen Rufnummern ("black list") gehört. Durch diese Prüfung würde für den Fall, dass diese Kontrolle über eine "white list" erfolgt, eine solche Telekommunikationsverbindung als gewünschte Telekommunikationsverbindung hergestellt, bei der die gewünschte Zielrufnummer auf einer weiteren Liste identifiziert werden kann und entsprechend würde in dem Fall, dass die Kontrolle bei einer "black list" erfolgt, nur eine solche Verbindung als gewünschte Telekommunikationsverbindung hergestellt, in dem Fall, dass die gewünschte Zielrufnummer nicht auf einer "black list" zu finden ist.

Im Fall von Festnetztelefonen, die z.B. über eine Firmentelefonvermittlungsanlage entweder untereinander oder an weitere Telekommunikationsnetzwerke Gesprächsanfragen stellen können, erfolgt diese Kontrolle anhand von "black" bzw. "white lists", über die zentrale Vermittlungsanlage dieses Firmentelefonnetzwerkes. So wird üblicherweise in einer Firma mittels dieser zentralen Vermittlungsanlage verhindert, dass kostenintensive Servicerufnummern angewählt werden können. Weiter können so über diese zentrale Vermittlungsanlage Berechtigungen für einzelne Apparate so eingestellt werden, dass diese z.B. Auslandsrufnummern wählen dürfen - oder eben nicht.

Der vorliegenden Erfindung liegt daher auch die Erkenntnis zugrunde, dass insbesondere im Falle von mobilen Telekommunikationsendgeräten, d. h. Mobiltelefonen eben eine solche Kontrolle und ein ähnliches Berechtigungskonzept nicht bereitgestellt werden kann, wenn nicht eine ähnliche Zentrale, bzw. neutrale Instanz zwischen das anfragende und das Zieltelekommunikationsendgerät geschaltet wird. Eben diese Instanz wird durch den erfindungsgemäßen Festnetzserver bereitgestellt, sodass die Vorteile einer firmeninternen Vermittlungseinheit bzw. Vermittlungsanlage erhalten bleiben können, auch wenn die entsprechenden Gespräche über mobile Endgeräte, z.B. Mobiltelefone, geführt werden.

Gemäß einem weiteren Aspekt wird die vorliegende Aufgabe gelöst durch ein Telekommunikationsendgerät, das in einem Telekommunikationsnetz registriert ist. Dieses Telekommunikationsendgerät, z.B. ein Mobiltelefon, weist eine Eingabeschnittstelle für die Eingabe einer gewünschten Zielrufnummer auf. Weiter weist das Telekommunikationsendgerät eine Verbindungseinheit zur Herstellung einer Verbindung in einem Telekommunikationsnetz, z.B. das Telekommunikationsnetz, in dem das Telekommunikationsendgerät registriert ist, auf.

Weiter weist das erfindungsgemäße Telekommunikationsendgerät ein oder mehrere Software-Komponenten auf, die in dem Telekommunikationsendgerät gespeichert und installiert sind, und dafür eingerichtet sind, von dem Telekommunikationsendgerät ausgehende Gesprächsanfragen zu initialisieren und bei der Initialisierung einer ausgehenden Gesprächsanfrage über eine hergestellte Telekommunikationsverbindung Informationen über eine gewünschte Zielrufnummer zu übergeben, wobei die Software-Komponente weiter dafür eingerichtet ist, auf dem Telekommunikationsendgerät eintreffende Gesprächsanfragen bezüglich der Identität der anrufenden Stelle zu analysieren und auf Basis der Identitätsanalyse Gesprächsanfragen abzulehnen und eine von dem Telekommunikationsendgerät ausgehende Gesprächsanfrage zu initialisieren.

Weitere bevorzugte Ausführungsformen sind in den abhängigen Ansprüche spezifiziert und werden im Folgenden beschrieben mit Bezug auf die begleitenden Figuren, in welchen:
- Fig. 1: einen schematischen Überblick über ein vereinfachtes Telekommunikationsvermittlungssystem gemäß dem Stand der Technik gibt,
- Fig. 2: einen schematischen Überblick über ein vereinfachtes Telekommunikationsvermittlungssystem entsprechend einer bevorzugten Ausführungsform der vorliegenden Erfindung gibt,
- Fig. 3: eine schematische Darstellung eines mobilen Telekommunikationsendgerätes gemäß einer bevorzugten Ausführungsform der vorliegenden Erfindung zeigt,
- Fig. 4: eine schematische Übersicht der Elemente und Abläufe eines Vermittlungssystems gemäß einer Ausführungsform der vorliegenden Erfindung zeigt, und
- Fig. 5: ein Ablaufdiagramm der verschiedenen Arbeitsschritte eines Vermittlungssystems gemäß einer bevorzugten Ausführungsform zeigt.

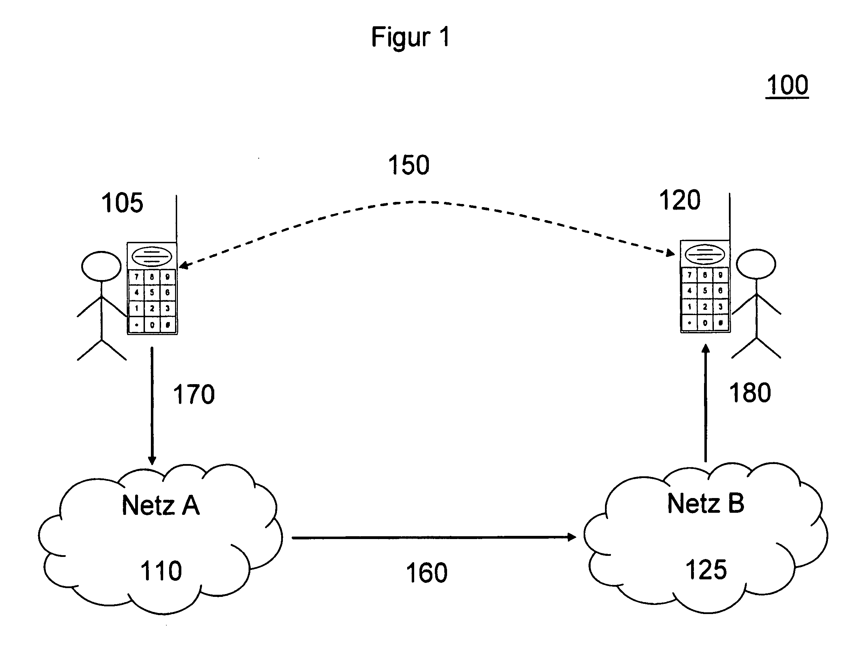

Fig. 1 zeigt eine vereinfachte schematische Übersicht von einer Vermittlung von Gesprächen und/oder Telekommunikationsdienstleistungen zwischen Endgeräten, die in Netzwerken verschiedener Betreiber registriert sind.

Das Telekommunikationssystem 100 weist Telekommunikationsendgeräte 105 und 120 auf. Gemäß einer bevorzugten Ausführungsform sind diese Telekommunikationsendgeräte als mobile Telekommunikationsendgeräte ausgeführt, bevorzugter Weise als Mobiltelefone. Die in Fig. 1 angedeutete Ausführung als mobiles Telekommunikationsendgerät bzw. Mobiltelefon ist jedoch nur von exemplarischen Charakter, ebenso wie die gezeigte Anzahl der registrierten Telekommunikationsendgeräte. Insbesondere können in den jeweiligen Telekommunikationsnetzwerken 110 und 125 jeweils praktisch beliebig viele Telekommunikationsendgeräte 105/120 registriert sein und die jeweiligen Telekommunikationsendgeräte von unterschiedlicher Art sein. Insbesondere könnten diese Telekommunikationsendgeräte mobile Telefone sein, Festnetztelefone oder auch Serverinfrastrukturen. Beispielsweise kann zumindest ein Telekommunikationsendgerät 120 als Infrastruktur eines Telekommunikationsdienstes bzw. eines Teledienstes ausgeführt sein, wobei dieser Teledienst Dienste z.B. im Sinne von Mehrwertdiensten, Servicehotlines, Mediadienstleistungen oder ähnliches bereitstellt.

Fig. 1 zeigt exemplarisch, dass für eine gewünschte Telekommunikationsverbindung 150, z.B. ein Gespräch 150, zwischen einem beliebigen Telekommunikationsendgerät 105, dass in dem Telekommunikationsnetzwerk 110 registriert ist eine Verbindung 160 von dem Telekommunikationsnetz 110 zum Telekommunikationsnetz 125 hergestellt werden muss. In der schematischen Darstellung von Fig. 1 wird dabei das Telekommunikationsnetz 110, z.B. das Mobilfunknetz A, von einem Netzbetreiber A bereitgestellt, während das Telekommunikationsnetz 125, z.B. des Mobilfunknetz B, von Betreiber B bereitgestellt wird. Für die Durchleitung des Gespräches 150, das von Telekommunikationsendgerät 105 initiiert und zu Telekommunikationsgerät 120 gerichtet ist, muss daher der Netzbetreiber A diese Gesprächsanfrage 170 des Telekommunikationsendgerätes 105 über das Netz 125 des Netzbetreibers B an das Telekommunikationsendgerät 120 weiterleiten. Für diese Weiterleitung oder auch Terminierung ist nach dem Stand der Technik der Netzbetreiber B berechtigt dem Netzbetreiber A ein signifikantes Serviceentgelt bzw. eine Terminierungsgebühr in Rechnung zu stellen. Diese Terminierungsgebühren sind international weitestgehend reguliert, sodass insbesondere für die Terminierung in Festnetze geringe Gebühren anfallen - für die Terminierung in mobile Telekommunikationsnetze jedoch erheblich höhere, etwa um Faktor 10 höhere, Gebühren anfallen.

Daher wird also in dem Fall, dass der Nutzer des Endgerätes 105 den Nutzer des Endgerätes 120 zum Beispiel anrufen möchte, durch den Nutzer am Endgerät 105 die Rufnummer des Endgerätes 120 eingegeben. Nach Bestätigung dieser Eingabe wird vom Telekommunikationsendgerät 105 eine Verbindung 170 zum Netz 110 hergestellt, in dem das Telekommunikationsgerät 105 über den Netzbetreiber A registriert ist. Da jedoch das Telekommunikationsgerät 120 jedoch im Netz 125 des Netzbetreibers B registriert ist, kann der Netzbetreiber A aus dem Netz 110 nicht direkt eine Verbindung zum Telekommunikationsendgerät 120 herstellen. Vielmehr wird der Netzbetreiber A des Netzwerkes 110 über Verbindung 160 die Vermittlungsanfrage des Telekommunikationsendgerätes 105 an den Netzbetreiber B des Netzes 125 weiterreichen, der dann über die Verbindung 180 zum Telekommunikationsgerät 120 letztlich die Verbindung 150 zwischen Telekommunikationsendgerät 105 und 120 herstellt.

In dem exemplarischen Beispiel der Fig. 1 wird die Verbindung 150 bevorzugter Weise zwischen zwei mobilen Endgeräten 105 und 120 hergestellt, sodass die Netze 110 und 125 in diesem Beispiel als mobile Telekommunikationsnetze ausgeführt sind. In diesem Fall würden entsprechend signifikante Vermittlungskosten des Netzbetreibers B für die Verbindung 160 an den Netzbetreiber A in Rechnung gestellt, der diese Kosten entsprechend dem Nutzer des Endgerätes 105 in Rechnung stellt.

Gemäß einer weiteren Ausführungsform ist ein Telekommunikationsendgerät 120 als ein Mehrwertinfrastrukturgerät ausgeführt. In diesem Fall wird über das Telekommunikationsendgerät 105 durch die Verbindung 150 eine Verbindung zu einem Telekommunikationsmehrwertservice, einem Teledienst oder ähnlichem bereitgestellt. Dieser wird noch einmal entsprechend höhere Kosten in Rechnung stellen.

In dieser Telekommunikationsvermittlung bzw. Gesprächsterminierung nach dem Stand der Technik kann also nicht sichergestellt werden, dass Endgerät 105 nur solche Verbindungen 150 herstellt, die gewünscht sind - sodass gewollter oder ungewollter Missbrauch präventiv ausgeschlossen werden kann. Weiter ist diese Verbindung 150 nach dem Stand der Technik in keiner Weise kostenoptimiert, da jeweils eine relativ teure Terminierung in ein Mobilnetz anfällt.

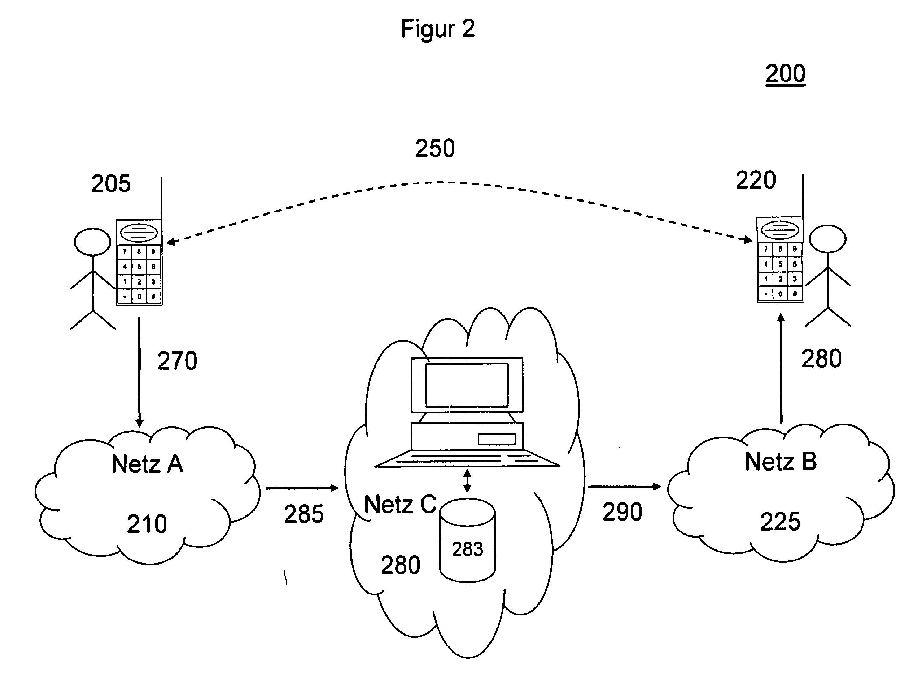

Fig. 2 zeigt nun ein erfindungsgemäß optimiertes Vermittlungssystem 200 für die Bereitstellung von einer Verbindung 250 zwischen den Telekommunikationsendgeräten 205 und 220. Auch in dieser an die Fig. 1 angelehnten schematischen Darstellung hat die Ausführung der Telekommunikationsendgeräte 205 und 220 als mobile Telekommunikationsendgeräte oder mobile Telefone nur exemplarischen Charakter, ebenso wie die hier gezeigte Anzahl dieser Telekommunikationsendgeräte. Tatsächlich können gemäß der vorliegenden Erfindung beliebig viele Telekommunikationsendgeräte 205 im Netz 210 registriert sein, sowie auch beliebig viele Telekommunikationsendgeräte 220 im Netz 225 registriert sein können.

Ähnlich wie im vorher dargestellten Stand der Technik ist auch in der Darstellung der Fig. 2 eine Verbindung 250 zwischen den Telekommunikationsendgeräten 205 und 220 angestrebt. Wiederum wird zur Herstellung dieser Verbindung 250 das Telekommunikationsendgerät 205 eine Verbindung 270 zum Netzwerk 210 herstellen, das vom Netzbetreiber A bereitgestellt wird und in dem das Telekommunikationsendgerät 205 registriert ist.

Gemäß einer bevorzugten Ausführungsform der vorliegenden Erfindung wird nun jedoch keine direkte Verbindung zum Netz 225 des Netzbetreibers B hergestellt, der das Netz 225 bereitstellt und in dem das Telekommunikationsendgerät 220 registriert ist. Vielmehr wird vom Telekommunikationsendgerät 205 über das Netz 210 eine Verbindung 285 zu einem zentralen Gateway 280 hergestellt und wiederum von diesem zentralen Gateway 280 eine Verbindung 290 zum Netz 225 vermittelt. Bevorzugter Weise ist das zentrale Gateway 280 als ein neutraler Festnetzserver ausgeführt, der ähnlich wie die Netze 210 und 225 einem Netzbetreiber C zugeordnet ist. In einer bevorzugten Ausführungsform ist der Netzwerkserver 280 so ausgeführt, dass er Channel-Signaling Protokolle, beispielsweise gemäß SS7/C7 Interconnection bereitstellt. Somit fungiert in einer bevorzugten Ausführungsform der erfindungsgemäße Gateway-Server 280 als ein autarkes und neutrales Telekommunikationsnetzwerk C, das von dem Netzwerkbetreiber C bereitgestellt wird.

Gemäß einer bevorzugten Ausführungsform ist der Netzwerkserver 280 mit Switching-Technologie ausgestattet, sodass der Netzwerk- oder auch Gateway-Server 280 eine Verbindung zwischen zwei eintreffenden Verbindungsanfragen 285 und 290 herstellen kann. In dieser bevorzugten Ausführungsform ist der Netzwerkserver 280 so ausgeführt, das er zwei am Netzwerkserver anliegende Kommunikationsverbindungen 285 und 290 so zusammenschalten kann, dass dadurch zwischen den Endgeräten 205 und 220 eine Kommunikationsverbindung 250 hergestellt wird.

In einer weiteren bevorzugten Ausführungsform ist der Netzwerkserver 280 so ausgestattet, dass die Gesprächsanfrage eines Telekommunikationsgerätes 205 dahingehend überprüft werden kann, dass die Zielrufnummer des von Telekommunikationsendgerät 205 angefragten Telekommunikationsendgerätes oder Telekommunikationsdienstes 220 auf deren Zulässigkeit geprüft wird. Somit bietet der Netzwerkserver 280 in dieser bevorzugten Ausführungsform unter anderem den Vorteil, dass durch entsprechende Filtermechanismen, die computerimplementiert auf dem Netzwerkserver 280 installiert sind, solche Gesprächsanfragen des Telekommunikationsendgerätes 205 unterdrückt, bzw. verhindert, werden können, die zu nicht erwünschten Telekommunikationsendgeräten oder Telekommunikationsdienstleistungen 220 führen würden. -

Das erfindungsgemäße Vermittlungssystem bietet daher insbesondere Vorteile für Organisationen, die ihren Mitgliedern Telekommunikationsendgeräte zur dienstlichen Nutzung überlassen. Wenn z.B. in einer Firma ein Dienstapparat 205 zur Verfügung gestellt wird, werden nun alle Gespräche von diesem Apparat 205 über das zentrale Gateway 280 geroutet. Das zentrale Gateway 208 wiederum wird durch die Bereitstellung von Switching-Komponenten und Channel-Signaling Protokollen, beispielsweise gemäß SS7/C7 Interconnection, ein neutrales Netzwerk C konstituieren und gegenüber Netzwerkbetreibern A und B repräsentieren. Somit fungiert in dieser bevorzugten Ausführungsform der erfindungsgemäße Gateway-Server 280 als ein autarkes und neutrales Telekommunikationsnetzwerk C, das von dem Netzwerkbetreiber C bereitgestellt wird. Auf diesem Gateway-Server oder Netzwerkserver 280 können Firmen, die z.B. ihre dienstlich überlassenen Mobiltelefone 205 entsprechend registrieren lassen für jeden diese Apparate 205 über den Gateway-Server 280 eine zentrale Kontrollinstanz 280 herstellen lassen, die kontrollieren kann, welche Gespräche bzw. Zielrufnummern 250 von dem mobilen Endgerät 205 angewählt werden können - und welche nicht. So kann die Firma für diese Mobiltelefone 205 jederzeit eine Kostenkontrolle durchführen und über Berechtigungsstufen (z.B. Auslandsgespräche erlaubt oder nicht erlaubt) eine sehr fein gegliederte Kosten- und Berechtigungskontrolle gewährleisten. Dies wird in einer bevorzugten Ausführungsform über auf dem Netzwerkserver 280 hinterlegte Listen von erlaubten Rufnummern ("white lists") bzw. verbotene Rufnummern ("Black lists") und entsprechenden Zugangsregeln ermöglicht. In dieser bevorzugten Ausführungsform wird Gateway-Server 280 jede Gesprächsanfrage 285 mit diesen Listen bzw. Regeln abgleichen und nur solche Verbindungen 250 herstellen, die gewünscht sind, d.h. solche Verbindungen 250, die konform zu den für das Endgerät 205 hinterlegten Nummern-Listen bzw. Regeln sind.

Gemäß einer bevorzugten Ausführungsform werden daher auf dem Netzwerkserver 280 Rufnummern oder Teile von Rufnummern in Speicher 283 gespeichert (z.B. Vorwahlen) für die keine Verbindung über den Netzwerkserver 280 bereitgestellt werden soll. In dieser bevorzugten Ausführungsform können z.B. Organisationen, für deren Mitglieder dienstlich zu nutztende Mobiltelefone bereitgestellt werden, verhindern, dass von diesen Mobiltelefonen 205 Gespräche zu Endgeräten 220 oder Telekommunikationsdiensten 220 hergestellt werden, die durch den dienstlichen Zweck dieser bereitgestellten Kommunikationsgeräte 205 nicht abgedeckt sind. Insofern kann durch diese bevorzugte Ausführungsform des Netzwerkservers 280 das unerwartete oder/und unerwünschte Auftreten besonders hoher Abrechnungsgebühren durch Netzbetreiber B des Netzes 225 und/oder Telekommunikationsdienste 220 verhindert werden.

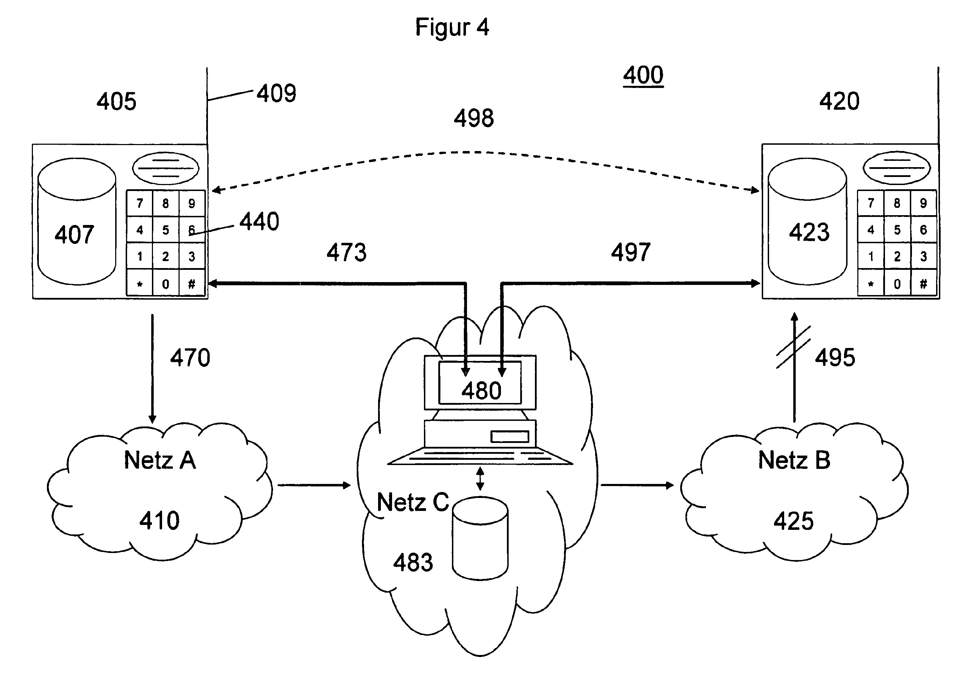

Verfahren und Ablauf der Vermittlung der Gesprächsanfrage 270 des Telekommunikationsgerätes 205 über den Netzwerkserver 280 werden in Zusammenhang mit Fig. 4 näher erläutert.

Aus der Fig. 2 wird bereits deutlich, dass die vorliegende Erfindung die Gesprächsrichtung 250 zwischen Telekommunikationseinheiten 205/220 durch die Zwischenschaltung eines neutralen Servers 280 ermöglicht. In der hier gezeigten bevorzugten Ausführungsform ist daher Server 280 so eingerichtet, z.B. durch entsprechende Switching- und Routing-Komponenten sowie durch die Bereitstellung von Interconnection-Fähigkeit z.B. gemäß C7/SS7, dass er von anderen Netzbetreibern 210/225 bzw. A/B sowie durch ggf. relevante Regulierungsbehörden im Rahmen der Regulierung von Endgelten im Bereich der Gesprächsterminierung als Betreiber eines öffentlichen Telekommunikationsnetzes 280 bzw. als Netzwerkprovider 280 anerkannt und entsprechend repräsentiert wird. Server 280 baut damit nicht auf vorhandene Provider-Infrastruktur von Providern A bzw. B auf sondern stellt erfindungsgemäß eine eigene Telekommunikationsinfrastrukturinstitution 280, sodass Netzbetreiber A/B für die Terminierung von Gesprächen von und zum Netzwerk 280 das Netzwerk 280 als leitungsgebundenes Netz 280 oder eben Festnetz 280 betrachten (müssen).

Dazu wird in einer bevorzugten Ausführungsform der Festnetzserver 280 bei den entsprechenden Regulierungsbehörden, in Deutschland z.B. die Bundesnetzagentur, als Dienst angemeldet, so dass der Festnetzserver 280 als Netzbetreiber C, in Deutschland z.B. als Teilnetzbetreiber mit vollständiger Rufnummernkapazität, registriert wird. In einer bevorzugten Ausführungsform wird die Rufnummernkapazität am Server 280 dadurch hergestellt, dass Software- Komponenten des Servers 280 dafür eingerichtet sind, Rufnummern auf dem Server 280 zu hinterlegen. Dafür werden in einer bevorzugten Ausführungsform Rufnummern für den Server 280 bei den entsprechenden Regulierungsbehörden beantragt und diese oder alternativ bestehende Rufnummern auf den Server 280 portiert. Dadurch kann in dieser bevorzugen Ausführungsform für den Server 280 gegenüber den entsprechenden Zulassungs- bzw. Regulierungsbehörden der Nachweis über die Fähigkeit zum Netzbetrieb, zur Abrechnung der Verbindungen zwischen den Netzbetreibern und zur Teilnahme am Portierungsdatenaustausch erbracht werden. Damit kann in dieser Ausführungsform das physische Netz des Servers 280 klein sein, in einer Ausführungsform möglicherweise nur aus dem Server 280 selbst bestehen. Jedoch beeinflusst diese physische Größe die Arbeitsweise nicht, da die betreffenden Rufnummern logisch auf dem Server 280 liegen - unabhängig von der Größe. Weiter wird in einer bevorzugten Ausführungsform diese Registrierung bei einem Hauptnetzbetreiber des jeweiligen nationalen Telefonnetzes, in Deutschland z.B. die Deutsche Telekom AG, zum Portierungsdatenaustausch angemeldet, so dass Anrufe, in das jeweilige nationale Netz geleitet werden, den Rufnummern bzw. Signalisierungsadressen, die auf dem Server 280 hinterlegt sind, zugeordnet werden und dann in das von dem Server 280 konstituierte Kommunikationsnetz weitergegeben werden. Dazu wird der Hauptnetzbetreiber des jeweiligen nationalen Telefonnetzes die Zusammenschaltung des Server 280 bzw. der Netzes C, das durch den Server 280 konstituiert wird, mit dem Netz des Hauptnetzbetreibers des jeweiligen nationalen Telefonnetzes veranlassen, auf Basis der relevanten Protokollen die Zusammenschaltung mit dem Server 280 testen, und diese bei erfolgreichem Test freigeben.

In einer weiteren Ausführungsform wird daher der neutrale Server 280 für den Fall, dass die Verbindung 250 nicht nur als netzübergreifende Verbindung 250 (z.B. Mobil-zu-Mobil oder Fest-zu-Mobil) und z.B. national sondern insbesondere auch als internationale Verbindung 250 angestrebt ist, so ausgeführt sein, dass weitere länderspezifische, neutrale Server 280 die Serverstruktur 280 ergänzen. In dieser bevorzugten Ausführungsform ist daher Server 280 als zumindest ein länderspezifischer neutraler Server 280 und mindestens ein zentraler neutraler Server 280 ausgeführt. In dieser bevorzugten Ausführungsform wird die Verbindung 250 z.B. aus einem Land Xin ein anderes Land Y angestrebt, Endgerät 205 ist also in einem ersten Land X registriert und Endgerät 220 ist in einem anderen Land Y registriert bzw. die Netzwerke 210/220 sind jeweils in anderen Ländern X und Y konstituiert.

In dieser weiteren Ausführungsform wird die Signalisierung 285 vom ersten Endgerät 205 an den zentralen Festnetzserver 280 zunächst an einen der länderspezifischen Server 280 geschickt bzw. gesendet, eben den länderspezifischen Server 280, der in dem Land X konstituiert ist, in dem Endgerät 205 sich befindet bzw. in dem Endgerät 205 registriert ist. Die Signalisierung kann in dieser Ausführungsform ebenso wie in den weiter oben oder später ausgeführten Ausführungsformen erfolgen durch die Anwahl der Rufnummer des Servers 280 durch das Endgerät 205 oder auch alternativ durch Protokolle wie DTMF (Dual Tone MultiFrequency), USSD (Unstructured Supplementary Service Data) oder GPRS (General Packet Radio Service) oder andere vergleichbare Daten- und oder Kommunikationsprotokolle. Diese Signalisierung wird an den länderspezifischen Festnetzserver 280, der z.B. in den USA konstituiert ist, geleitet und von diesem über z.B. Datenflatrates weitgehend kostenfrei z.B. per IP-Service an den zentralen neutralen Server 280 weiterleitet, der z.B. in Deutschland konstituiert ist.

Damit ist die erfindungsgemäße Technik international einsetzbar und betreibbar ohne das überall auf der Welt Switching-Infrastruktur bereitgestellt werden muss. In dieser bevorzugten Ausführungsform kann einziger Switch, - nämlich der des zentralen neutralen Servers 280 - ausreichen, zumindest dann, wenn Vereinbarungen zur Weiterleitung der Signale bzw. der Signalisierung 285 mit dem Betreiber eines bestehenden Switches in den USA (in diesem Beispiel) bestehen.

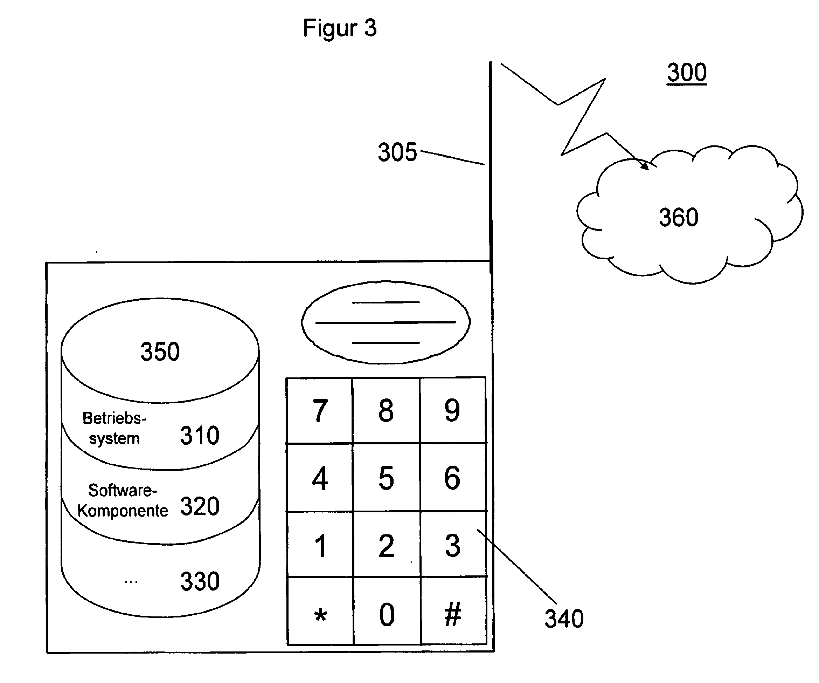

Fig. 3 zeigt schematisch den Aufbau eines Telekommunikationsendgerätes 300, das der in Fig. 1 und 2 gezeigten Telekommunikationsendgeräten 105, 120, 205 und 220 entspricht.

Das Telekommunikationsgerät 300 ist in einer bevorzugten Ausführungsform als mobiles Telekommunikationsendgerät oder auch Mobiltelefon ausgeführt. Jedoch hat die Ausführung als mobiles Telekommunikationsgerät 300 nur exemplarischen Charakter. Ebenso erlaubt das erfindungsgemäße Vermittlungssystem die Anbindung von Festnetztelekommunikationsendgeräten, mobilen oder fest installierten Datenendgeräten und/oder auch die Anbindung von Daten- oder Kommunikationsempfängern.

Eine bevorzugte Ausführungsform des Telekommunikationsendgeräts 300 weist eine Einrichtung 305 auf, die dazu geeignet ist, eine Verbindung zu dem Netz 360 eines Netzbetreibers A herzustellen, in dem das erfindungsgemäße Telekommunikationsendgerät 300 registriert ist. In der Fig. 3 wird diese Einrichtung 305 exemplarisch als die Antenne eines Mobiltelefons ausgeführt. Jedoch ist dies nur eine exemplarische Ausführungsform dieser Verbindungseinrichtung 305, die gemäß der vorliegenden Erfindung ebenfalls als leitungsgebundene Verbindung, Satellitenverbindung oder jede andere Form von Daten- oder Sprachprotokollverbindung ausgeführt sein kann.

Des Weiteren weist das Telekommunikationsendgerät 300 eine Einrichtung 340 auf, die als Eingabevorrichtung 340 ausgeführt ist. In einer bevorzugten Ausführungsform ist die Einrichtung 340 als ein Tastaturfeld ausgeführt, über das der Nutzer des mobilen Telefons 300 die Zielrufnummer eines Zieltelefons 220 eingeben kann. Die Ausführung der Einrichtung 340 als Ziffernblock hat jedoch nur exemplarischen Charakter und so ist auch jede andere Form der technischen Ausführung einer Mensch-Maschine Schnittstelle für die Eingabe einer Rufnummer gemäß der vorliegenden Erfindung anwendbar. Insbesondere kann die Eingabeschnittstelle 340 ebenfalls ausgeführt sein als eine Spracherkennungsschnittstelle, ein Touch Screen, eine Computertastatur oder ein Pointing-Device.

Weiter weist das erfindungsgemäße Telekommunikationsendgerät 300 Einrichtungen 350 zum Speichern von Software 320/330 und Daten 330 sowie eines Betriebssystems 310 auf.

In einer bevorzugten Ausführungsform ist die Einrichtung 350 als eine Speichereinrichtung ausgeführt, die sowohl als RAM als auch als ROM Speicher oder auch mit oder durch rotierende oder feste Speichertechnologien ausgeführt sein kann. In der schematischen Darstellung der Fig. 3 speichert in einer bevorzugten Ausführungsform die Einrichtung 350 zumindest ein Betriebssystem 310 sowie eine spezifische Software-Komponente 320, wobei insbesondere die Software-Komponente ein Teil des erfindungsgemäßen Vermittlungssystems 200 ist. Die Speicherung der beiden Komponenten 310 und 320 hat jedoch nur exemplarischen Charakter, sodass die Einrichtung 350 auch weitere Komponenten 330 aufnehmen könnte.

Das Betriebssystem 310 wird in einer bevorzugten Ausführungsform des Telekommunikationsendgerätes 300 vom Hersteller dieses Telekommunikationsendgerätes 300 zusammen mit diesem Telefon 300 ausgeliefert. Das Betriebssystem stellt daher die grundsätzlichen Funktionen des Telekommunikationsendgerätes 300 bereit, während weitere Bausteine 320 und 330 zusätzliche Funktionen bereitstellen können in dem diese Bausteine auf dem Mobiltelefon 300 gespeichert und installiert werden. Die Ausführung des Betriebssystems 310 als eine Software-Komponente, die auf der Einrichtung 350 im Telekommunikationsendgerät 300 gespeichert ist, hat jedoch nur exemplarischen Charakter. Ebenso könnten die Grundfunktionen des Telekommunikationsendgerätes 300 als elektronische Bauteile ausgeführt sein und insbesondere kann das Telekommunikationsendgerät 300 mehrere Einrichtungen 350 aufweisen.

Die Software-Komponente 320 des Telekommunikationsendgerätes 300 wird für das Telekommunikationsendgerät 300 bereitgestellt vom Netzwerkbetreiber C des Netzwerks 280 das in Fig. 2 bereits gezeigt wurde. Die Software-Komponente 320, die vom Netzbetreiber C bereitgestellt wird, wird in einer bevorzugten Ausführung so auf der Einrichtung 350 gespeichert und in dem Telekommunikationsendgerät 300 eingerichtet, dass die Software-Komponente 320 sich im Falle eines Anrufes von oder an das Telekommunikationsgerät 300 zwischen ein z.B. automatische Rufannahmeverfahren des Betriebssystems 310 des Telekommunikationsendgerätes 300 schalten kann. In dieser bevorzugten Ausführungsform schaltet sich die Software-Komponente 320 zwischen das Betriebssystem 310 und die Einrichtung zur Verbindungsherstellung 305, sodass unabhängig von der Rufnummer, die über die Einrichtung 340 am Telekommunikationsendgerät 300 eingegeben wird, die Software-Komponente 320 beeinflussen kann, welche Rufnummer tatsächlich über die Verbindungseinrichtung 305 angewählt wird.

Ebenso wird die Einrichtung der Software-Komponente 320 so vorgenommen, dass die Software-Komponente 320 im Fall eines über die Verbindungseinrichtung 305 eintreffenden Anrufes die eintreffende Rufnummer hinsichtlich der Identität des anrufenden bzw. anfragenden Endgerätes analysieren kann und das Betriebssystem 310 des Telekommunikationsendgerätes 300 so beeinflussen kann, dass dieser eintreffende Anruf angenommen wird oder stattdessen ein "Besetzt"-Zeichen als Antwort gesendet wird.

Die Software-Komponente 320 ist daher in einer bevorzugten Ausführungsform sowohl auf dem Telekommunikationsgerät 205 als auch auf dem Telekommunikationsgerät 220 gespeichert und installiert, sodass die Software-Komponenten 320 auf diesen Telekommunikationsendgeräten 205/220 zusammen mit dem Netzwerkserver 280 die Vermittlung von Gesprächen gemäß des Vermittlungssystems 200 ermöglichen. Somit wird in einer bevorzugten Ausführungsform der vorliegenden Erfindung die gesamte Verbindungstrecke vom Telekommunikationsgerät 205 zum Telekommunikationsgerät 220 über Festnetzserver 280 und somit beide Säulen (Endgeräte) der Verbindung sowie beide Richtungen der Verbindung 250 technisch und damit automatisiert kontrolliert.

In einer bevorzugten Ausführungsform wird von der für diese Kontrolle notwendige Technik ein möglichst geringer Teil in die Software-Komponenten 320 der Endgeräte 205/220 integriert, um eine möglichst hohe Gerätekompatibilität herzustellen, so dass diese Software-Komponente 320 auf eine möglichst große Vielzahl von Endgeräte-Typen migriert werden können. IN dieser Ausführungsform wird dagegen der größere Teil der für diese Kontrolle notwendigen Technik auf dem zentralen, neutralen Server 280 hinterlegt sein.

Bevorzugterweise wird die Software-Komponente jedoch Merkmale aufweisen, die die Hinterlegung einer Matrix aus Tarif und Heimatland des Nutzers ermöglichen. Weiter werden in dieser Ausführungsform die aktuelle Netzkennzahl mithin also der Standort des Nutzers sowie die Zieldestination des Anrufs 285 auf Basis der Vorwahlcodes und weiter verfügbare Netze wie z.B. WLAN, GPRS, EDGE, GSM, UMTS oder ähnliche in der Software-Komponente 320 hinterlegt. Bevorzugterweise erfolgt über die Software-Komponente 320 weiter ein Monitoring der aktuell verfügbaren Netze des Standorts (Netzkennzahl) sowie der eingelegten Identifikations-Karte (Tarif u Heimatland), z.B. der SIM-Karte. In einer Ausführungsform wird dieses Monitoring weiter die ein- und abgehenden Anrufe umfassen, z.B. durch Auslesen dieser Rufnummern "von rechts" da die Übermittlung internationaler Dialcodes nicht einheitlich geregelt ist. Die Software-Komponente 320 wird bevorzugterweise weiter in Reaktion auf dieses Monitoring entsprechend der Matrix direkt über die Identifikations- bzw. SIM-Karte eine Aktion des entsprechenden Endgerätes 300 auslösen, wie z.B. Callthrough, Callback, Callreverse, WLAN-Call oder ähnliche.

Der Ablauf dieser Gesprächsvermittlung wird nun in der folgenden Fig. 4 weiter erläutert.

Die Fig. 4 zeigt das Zusammenwirken der einzelnen Komponenten des Vermittlungssystems 200 bzw. 400, wie es teilweise bereits in Fig. 2 schematisch vorgestellt wurde.

Insbesondere zeigt Fig. 4 die Telekommunikationsendgeräte 405 und 420, die ähnlich wie das Telekommunikationsgerät 300 ausgeführt sind und insbesondere jeweils eine Software-Komponente 407 bzw. 423 aufweisen. Gemäß des gesprächsrichtenden Vermittlungssystems 400 wird nun in dem Fall, dass der Nutzer am Endgerät 405 über die Eingabeschnittstelle 440 eine Rufnummer eingibt, die Software-Komponente 407 aktiviert. Diese Software-Komponente 407 schaltet sich zwischen die Betriebssystemkomponente 310 des Endgerätes 405 und die Verbindungseinrichtung 409 und wird statt einer Verbindungsanfrage an das Endgerät 420 eine Verbindungsanfrage 470 an den Netzwerkserver 480 zum Netzbetreiber A des Netzwerkes 410 übergeben. Das bedeutet, dass gemäß der Ausführungsform des mobilen Endgerätes 405 die Software-Komponente 407 die eingegebene Rufnummer zumindest temporär speichert und unabhängig von dieser vom Nutzer eingegebenen Rufnummer eine Verbindung 470 zum Netz 410 herstellt, die an den Festnetzserver 480 gerichtet ist.

Diese Verbindungsanfrage 470 kann z.B. durch die Anwahl einer spezifischen Rufnummer des Festnetzservers 480 ausgeführt werden, die in der Software-Komponente 407 hinterlegt ist. Durch die Verbindung 470 und die entsprechende Verbindungsanfrage an den Festnetzserver 480 wird der Netzbetreiber A des Netzwerkes 410 eine Verbindung zwischen dem mobilen Endgerät 405 und dem Festnetzserver 480 herstellen.

Der Festnetzserver 480 analysiert die Rufnummer der eingehenden Gesprächsanfrage 470 gemäß einer bevorzugten Ausführungsform zumindest dahingehend, ob die Rufnummer der eingehenden Gesprächsanfrage 470 von einem Gerät 405 stammt, das am Festnetzserver 480 für die Vermittlungsdienstleistung des Festnetzservers 480 registriert ist. Der Festnetzserver 480 erkennt in einer bevorzugten Ausführungsform über die so genannte "network-provided ID" die Identifikation des anrufenden Telekommunikationsendgerätes 405. Diese ID dient der Abrechnung zwischen Netzbetreibern und wird daher immer übermittelt, auch bei Unterdrückung von Rufnummern.

Jedoch kann die Identifikation auch über alternative Verfahren erfolgen. Insbesondere ist die Identifikation in der bevorzugten Ausführungsform durch ein robustes Verfahren ausgelegt, insbesondere international z.B. C7/SS7-Protokolle gerade in internationalen Mobilfunknetzen 410/420 leicht unterschiedlich ausgelegt sein können. Daher werden in der erfindungsgemäßen Technik Verfahren zur Identifikation der Endgeräte 405/420 am Netzserver 480 gewählt, die eine gewisse Robustheit aufweisen, z.B. durch Regeln wie die Normierung der maximalen Länge der Rufnummer auf 12 Stellen inkl. des Landescodes (z.B. Deutschland: 49), oder weiter die Interpretation der Rufnummer vom Ende also "von rechts" aus interpretiert.

Weiterhin kann in einer bevorzugten Ausführungsform der Festnetzserver 380 die übermittelte ID dazu nutzen, das anrufende Telekommunikationsgerät 405 einer bestimmten Service-Kategorie zuzuordnen. Diese Zuordnung kann in einer bevorzugten Ausführungsform dazu führen, dass nur bestimmte Rufnummern seitens Festnetzserver 480 zur Weiterleitung von Gesprächsanfragen des Telekommunikationsendgerätes 405 akzeptiert werden. D.h., in dieser bevorzugten Ausführungsform bricht das weitere Verfahren in dem Fall ab, dass mit der Gesprächsabfrage von Telekommunikationsgerät 405 eine Rufnummer an den Festnetzserver 480 übergeben wird, die entweder zu "verbotenen" Rufnummern oder nicht zu den "erlaubten" Rufnummern gehört.

Somit erlaubt die Vermittlung des Gesprächs ausgehend vom Telekommunikationsendgerät 405 über den Festnetzserver 480 die Definition spezifischer "white lists" (erlaubte Rufnummern) oder "black lists" (verbotene Rufnummern), sodass Organisationen, die ihren Mitgliedern z.B. dienstlich zu nutzende Mobiltelefone 405 bereitstellen, kontrollieren können, welche Rufnummern von diesen Telekommunikationsgeräten 405 angerufen werden. Insbesondere bietet dies den Vorteil, dass über ein zentrales Gateway 480 Organisationen die Möglichkeit eingeräumt wird, sehr teure Rufnummern, wie z.B. Auslandsrufnummern und/oder Rufnummern von Mehrwert- oder Service-Diensten zu unterdrücken, bzw. die Vermittlung an solche nicht zu ermöglichen. In dieser bevorzugten Ausführungsform übermittelt der Netzwerkserver 480 bevorzugterweise an das mobile Endgerät 405 ein Signal, das vom Nutzer des Gerätes 405 als eine Nachricht im Sinne von "Verbindung nicht erlaubt" interpretiert werden kann, sodass die Verbindung anschließend an die Übermittlung dieses Signals von Festnetzserver 480 unterbrochen werden kann.

Gemäß einer bevorzugten Ausführungsform ist der Netzwerkserver 480 als ein Festnetzserver ausgeführt, sodass der Festnetzserver 480 Teil eines Telekommunikationsfestnetzes C ist, das von einem Netzbetreiber C bereitgestellt wird. Gemäß dieser bevorzugten Ausführungsform wird also vom mobilen Endgerät 405 eine Verbindung 473 über das Festnetz zum Netzserver 480 hergestellt. Über die hergestellte Verbindung 473 übergibt die Software-Komponente 407 auf dem Endgerät 405 die an der Eingabeschnittstelle 440 eingegebene Rufnummer des Zielgerätes 420 an den Festnetzserver 480. Diese Übergabe kann in unterschiedlichen Protokollen oder Übermittlungsverfahren erfolgen. Beispielsweise kann diese Übergabe durch DTMF-Wähltöne, USSD-Protokoll oder auch GPRS-Daten oder weitere Protokolle oder Übermittlungsverfahren nach dem Stand der Technik erfolgen.

Die so über die Festnetzverbindung 473 vom mobilen Endgerät 405 über die Software-Komponente 407 an den Festnetzserver 480 übertragene Rufnummer des Endgerätes 420 wird wiederum vom Festnetzserver 480 dazu benutzt, eine Gesprächsanfrage über das Netz 425 des Netzbetreibers B zu stellen, die an das Endgerät 420 gerichtet ist. In einer bevorzugten Ausführungsform wählt der Netzwerkserver 480 die vom Endgerätes 420 übergebene Rufnummer an.

Der Netzwerkbetreiber B des Netzes 425 wird eine Verbindung 495 zum Endgerät 420 anfragen gemäß der Nummernwahl des Festnetzservers 480 bzw. gemäß der Verbindungsanfrage des Netzwerkservers 480. Gemäß der vorliegenden Erfindung ist, ähnlich wie am Telekommunikationsendgerät 405, ebenso am Telekommunikationsgerät 420 eine Software-Komponente 423 gespeichert und installiert. Somit ist auch das Telekommunikationsgerät 420 ähnlich wie das Telekommunikationsgerät 405 gemäß der vorliegenden Erfindung wie das exemplarische Telekommunikationsgerät 300 der Fig. 3 ausgeführt. Daher schaltet sich auf dem Telekommunikationsgerät 420 die Software-Komponente 423 bei einem eingehenden Anruf ein, d.h. die Software-Komponente wird durch einen eintreffenden Anruf bzw. eine eintreffende Anrufanfrage aktiviert, z.B. schaltet sich die Software-Komponente 423 in einer bevorzugten Ausführungsform zwischen das automatische Rufannahmeverfahren des Betriebssystems 310 des Endgerätes 420. Die Software-Komponente 423 analysiert die Rufnummer des eingehenden Anrufes 495 in einer bevorzugten Ausführungsform zumindest dahingehend, ob diese Rufnummer der in der Software-Komponente 423 hinterlegten Rufnummer des Festnetzservers 480 entspricht. Gemäß einer bevorzugten Ausführungsform kann diese Identifizierung über die so genannte "network-provided ID" des Anrufers erfolgen, die nach dem Stand der Technik als ID zur Abrechnung zwischen Netzbetreibern bei jeder Gesprächsanfrage übermittelt wird.

Die so genannte "network-provided ID" hat jedoch nur exemplarischen Charakter, sodass sowohl die Identifikation des anrufenden Telekommunikationsgerätes 405 am Festnetzserver 480 als auch die Identifikation des anrufenden Netzwerkservers 480 am Endgerät 420 auch mittels alternativer Identifikationsverfahren nach dem Stand der Technik durchgeführt werden kann.

Wird von der Software-Komponente 423 am Endgerät 420 mittels des Identifikationsverfahrens die bekannte Rufnummer des Festnetzservers 480 identifiziert, dann wird in Reaktion darauf in einer bevorzugten Ausführungsform das Betriebssystem 310 des Endgerätes 420 durch die am Endgerät 420 installierte Software-Komponente 423 veranlasst, ein "Besetzt"-Zeichen zu signalisieren. Dadurch kommt tatsächlich zwischen dem Festnetzserver 480 und dem Endgerät 420 keine Verbindung 495 zustande, für den Fall, dass eine Gesprächsanfrage vom Festnetzserver 480 über das Netz 425 an das Endgerät 420 gestellt wird. Der Festnetzserver 480 jedoch gibt dieses Signal, das "Besetzt"-Zeichen, nicht an das Endgerät 405 weiter, sondern wird stattdessen die Verbindung 473 weiter aufrechterhalten und dem Endgerät 405 bzw. dem Nutzer dieses Endgerätes weiterhin ein Freizeichen signalisieren.

Die Software-Komponente 423 wird als Reaktion auf die Identifikation eines eingehenden Anrufes vom Festnetzserver 480 und die Initialisierung eines "Besetzt"-Zeichens eine Verbindungsanfrage von Telefon 420 initiieren. In dieser bevorzugten Ausführungsform wird in Reaktion auf die am Endgerät 420 erkannte Gesprächsanfrage des Festnetzservers 480 die am Endgerät 420 installierte Software-Komponente 423 das Betriebssystem 310 des Endgerätes 420 veranlassen, eine Gesprächsanfrage 497 an den Festnetzserver 480 zu stellen.

Gemäß einer bevorzugten Ausführungsform wird dazu die Software-Komponente 423 das Betriebssystem 310 des Endgerätes 420 veranlassen, die in der Software-Komponente 423 hinterlegte Rufnummer des Festnetzservers 480 anzuwählen. Damit wird über den Netzbetreiber B des Netzes 425, in dem das Endgerät 420 registriert ist, eine Gesprächsanfrage an den Festnetzserver 480 geleitet. Die Software-Komponente 423 des Endgerätes 420 ruft daher parallel zur Aufrechterhaltung der Verbindung 473 durch den Festnetzserver 480 diesen Festnetzserver 480 zurück ("reverse callback") und der Festnetzserver 480 wird dieses Gespräch bzw. diese Gesprächsanfrage 497 des Endgerätes 420 dann annehmen, wenn über ein ähnlich dem weiter oben beschriebenen Verfahren eine positive Identifikation von Endgerät 420 am Netzserver 480 durchgeführt werden kann.

Gemäß einer bevorzugten Ausführungsform ist der Festnetzserver 480 mit Switching-Komponenten ausgestattet, sodass der Festnetzserver 480 über diese Switching-Komponenten die gehaltene Verbindung 473 und die angenommene Gesprächsverbindung 497 zusammenführen kann, sodass eine Verbindung 498 zwischen den Endgeräten 405 und 420 entsteht.

Durch das Zusammenwirken der Software-Komponenten 407 bzw. 423 der Telekommunikationsendgeräte 405 bzw. 420 unter Mitwirkung des Festnetzservers 480 wird somit jeweils von beiden Seiten, d.h. vom Endgerät 405 und vom Endgerät 420, jeweils ein Gespräch in einem Festnetz, im Speziellen das Festnetz 483 des Netzwerkbetreibers C, hergestellt. Dies ermöglicht eine deutlich günstigere Verbindung 498 zwischen den Endgeräten 405 und 420, da von beiden Seiten jeweils nur eine Festnetzverbindung angewählt wird, während alternativ im Stand der Technik, und wie in Fig. 1 ausgeführt, eine deutlich teurere Verbindung über verschiedene Mobilfunknetzwerke notwendig wäre.

Weiterhin erlaubt dieses über das zentrale Gateway 480 ermöglichte gesprächsrichtende Vermittlungsverfahren für Gespräche zwischen verschiedenen Telekommunikationsnetzen nicht nur eine kosteneffizientere Verbindung, sondern ermöglicht auch die Kontrolle der angewählten Verbindungen, sodass nur solche Verbindungen 498 über den Netzwerkserver 480 ermöglicht werden, die gewünscht, d.h. erlaubt bzw. gewollt sind. Wie weiter oben bereits ausgeführt, können über so genannte "black lists" verbotene Rufnummern am Festnetzserver 480 gespeichert werden, genauso wie über entsprechende "white lists" positiv erlaubter Rufnummern dort gespeichert sein könnten. So können spezifische Tarife für die Nutzer von Endgeräten 405 und 420 angeboten werden, da die Rufnummern, die von einem Endgerät 405 angewählt werden können, über das Zusammenwirken der Software-Komponente 407 und des Festnetzservers 480 kontrolliert bzw. limitiert werden können. Z.B. können so Firmen, die ihren Mitarbeiten dienstlich zu nutzende Mobiltelefone bereitstellen, die Nutzung dieser Mobiltelefone über die Vermittlungssysteme 480 effizient kontrollieren.

Durch das Zusammenwirken der Software-Komponenten 407 bzw. 423 und des Festnetzservers 480 wird somit ein Verfahren bereitgestellt, das der Herstellung einer Verbindung zwischen mobilen Endgeräten zu minimalen Kosten und bei gleichzeitiger maximaler Kontrolle ermöglicht. Dieses Verfahren stellte diese kosteneffiziente Verbindung in der dargestellten bevorzugten Ausführungsform dadurch her, dass der Festnetzserver 480 Teil eines "neutraten" Festnetzes 483 ist. Dadurch wird es ermöglicht, dass z.B. ein mobiles Telefon 405 ausschließlich kostengünstige Verbindungen zu einem festen Telekommunikationsnetzwerk 483 herstellen muss, um eine Verbindung zum mobilen Endgerät 420 zu erreichen, da dieses letzten Endes wiederum nur eine Verbindung 497 zu einem kostengünstigeren Festnetz herstellt. Es wird dadurch vermieden, dass sehr viel teurere Anrufe in Mobilnetzwerken 110 bzw. 125 terminiert werden müssen. Es erfolgt daher eine gezielte Richtungssteuerung der Anrufe von mobilen Engeräten 405 und 420, sodass statt einer direkten Verbindung mit erheblich höheren Kosten jeweils beide mobilen Endgeräte in das gleiche Festnetz 483 anrufen, und somit an regulierten Preisen für die Bereitstellung von Festnetzdienstleistungen profitieren können.

Daher kann die vorliegende Erfindung insbesondere dort wirtschaftlichen Nutzen entfalten, wo heterogene Kosten bei der Terminierung zwischen zwei Netzen 410/425 reguliert bzw. vereinbart sind. Somit findet die vorliegende Erfindung nicht nur Anwendung im Bereich der Mobilnetze - ist jedoch dort aufgrund der hohen Terminierungsentgelte besonders vorteilhaft.

Das gesprächsrichtende Optimierungsverfahren bietet daher den besonderen Vorteil, dass auf Seiten der Endgeräte 405 und 420 die wesentlichen Funktionen zur Bereitstellung dieses Verfahrens durch die Software-Komponenten 407 bzw. 423 realisiert werden, die ein Nutzer dieser Endgeräte auf seinem Endgerät installieren kann. Dies ermöglicht, dass der Nutzer von diesem optimierten Verfahren bzw. den Möglichkeiten des Vermittlungssystems profitieren kann, ohne sein Nutzungsverhalten tatsächlich ändern zu müssen. Die Software-Komponenten 407 bzw. 423 übernehmen in einer bevorzugten Ausführungsform daher zumindest Funktionen der Identifikation von Anrufern und der Übersetzung dieser Identifikation in eine Reaktion des Endgerätes 405 bzw. 420. Dazu weisen die Software-Komponenten 407 bzw. 423 in einer bevorzugten Ausführungsform entsprechende Parameter auf, sodass über die Parameterisierung korrektes Identifikations- und Reaktionsverhalten der Endgeräte 405 bzw. 420 bevorzugterweise einstellbar durch den Nutzer der jeweiligen Endgeräte gewährleistet wird.

In einer bevorzugten Ausführungsform werden daher alle Punkte der Kommunikationskette 498, also die Endgeräte 405/420 sowie der Server 480, systematisch kontrolliert miteinander in Verbindung gebracht. Dies ermöglicht nicht nur die weiter oben schon beschriebene Definition bzw. den Einsatz von white- bzw. black-lists am Server 480 sondern auch schon - unabhängig davon - den Einsatz solcher white- bzw. black-lists in ähnlicher Funktionsweise wie oben beschreiben am Endgerät 405. In dieser Ausführungsform erfolgt eine zweistufige Steuerung der Verbindungsaufbaus 498, die in einer ersten Stufe durch die definierten Listen am Endgerät 405 und in einer zweiten Stufe dann am Server 480 erfolgt. In dieser Ausführungsform kann weiter Wissens über den eingesetzten Tariftyp auf dem Endgerät 405 dazu genutzt werden, besonders günstige Verbindungen zum Server 480 herzustellen, z.B. unter Nutzung von Flatrates und bzw. durch gezielte Vermeidung von Kosten bei der Schaltung in bestimmte Netze.

Erfindungsgemäß erfolgt diese komplexe u.U. mehrstufige Steuerung der Gesprächsrichtung vollkommen automatisiert, so dass der Betreiber des Servers 480 für den jeweiligen Nutzer der Engeräte 405/420 nicht sichtbar wird und der Nutzer sein Nutzungsverhalten nicht ändern muss bzw. auch nicht manuell eingreifen muss.

Gemäß einer bevorzugten Ausführungsform weist der Festnetzserver 480 weiterhin so genannte C7- bzw. SS7-Interconnection-Merkmale auf, um die entsprechenden Signale verarbeiten zu können und die Abrechnung von Dienstleistungen zu und von Netzwerkbetreibern abrechnen zu können. Neben dieser C7- bzw. SS7-Interconnection weist der Festnetzserver 480 in einer bevorzugten Ausführungsform zusätzlich eine vollständige Rufnummerverwaltungs- und portierungsfähigkeit des jeweiligen Landes auf, um Entgelte berechnen zu können. Jedoch kann die vorliegende Erfindung in einer alternativen Ausführung auch ohne entsprechende Rufnummernverwaltung ausgeführt werden, da die Vermittlung einer Verbindung 498 zwischen den Endgeräten 405 und 420 über die Verbindungen 473 und 497 auch ohne diese Möglichkeit ausgeführt werden kann.

Gemäß einer weiteren bevorzugten Ausführungsform ist der Festnetzserver 480 so eingerichtet, dass eine Verbindung vom Endgerät 405 zu Informationsdiensten hergestellt werden kann.

Gemäß dieser bevorzugten Ausführungsform ist das Endgerät 420 nicht als mobiles Telekommunikationsendgerät ausgeführt, sondern weist Komponenten und / oder Merkmale für das Speichern und Senden von Informationsdiensten bzw. Unterhaltungsprogrammen, wie z.B. radioähnlichen Programmen und / oder Übertragungen auf. In dieser bevorzugten Ausführungsform wird das Endgerät 420 direkt eine Verbindung zum Netzwerk 483 aufweisen, ohne dass ein weiteres Netzwerk 425 über die Verbindung 497 zwischen das Endgerät 420 und das Netzwerk 483 geschaltet ist. In einer alternativen Ausführungsform kann jedoch weiterhin ein intermediäres Netzwerk 425 die Verbindung zwischen der Informations- bzw. Unterhaltungsdienstinfrastruktur 420 und dem Netzwerkfinder 83 herstellen.

In dieser alternativen Ausführungsform, in der über die Komponente 420 z.B. Hörfunkprogramme bereitgestellt werden, kann die auf dem Endgerät 405 installierte Software-Komponente 407 weitere Zusatzfunktionen aufweisen, die vom Nutzer des Endgerätes 405 über eine entsprechende Benutzerschnittstelle angewählt werden können. Bei Anwahl dieser zusätzlichen Funktionen der Software-Komponente 407 durch den Nutzer des Endgerätes 405 wird eine Verbindung 473 vom Endgerät 405 zum Festnetzserver 480 durch Anwahl der entsprechenden Rufnummer des Festnetzservers 480 vom Endgerät 405 aus hergestellt.

Gemäß einer bevorzugten Ausführungsform wird der Festnetzserver 480 den eintreffenden Anruf 473 des Endgerätes 405 identifizieren, sodass der Festnetzserver 480, wie bereits oben ausgeführt, den Anrufer bzw. das Endgerät 405 identifizieren kann. Somit kann der Festnetzserver 480 das Endgerät 405 dahingehend identifizieren, welche Mehrwert- bzw. Informationsdienste der Nutzer dieses Endgerätes 405 z.B. auf dem Wege eines Abonnements von dem Bereitsteller des Netzwerks 483 abonniert hat. Liegt eine solche Registrierung vor, bzw. wird das Endgerät 405 vom Festnetzserver 480 als Abonnent eines solchen Mehrwertdienstes erkannt, stellt der Festnetzserver eine Verbindung in der weiter oben beschriebenen Art und Weise zum Endgerät 420 so her, dass die am bzw. über das Festnetz 420 bereitgestellten Informations- bzw. Unterhaltungsprogramme über die Verbindung 473 an das mobile Telefon 405 übertragen werden. Auf diese Weise können beispielsweise rundfunkähnliche Teledienste vom Festnetzserver 480 unter Nutzung von Infrastruktur 420 bereitgestellt werden, die beispielsweise auch aus der Übertragung von Hörfunkwerbung oder gesponserten Programmen refinanziert werden könnten. Da der Nutzer des Endgerätes 405 die Verbindung 423 über eine günstige Festnetzverbindung initiiert, entstehen auf Seiten des Nutzers des Endgerätes 405 sehr begrenzte Kosten, die z.B. über die Registrierung für einen entsprechenden Flatrate-Tarif sogar zeitunabhängig gestaltet werden können.

In einer weiteren bevorzugten Ausführungsform kann der Anwender des Endgerätes 405, der den oben beschriebenen radioähnlichen Teledienst 420 nutzt über die Telefontastatur auf im Programm enthaltene Aufforderungen zur Interaktion reagieren. Auf diese Weise kann z.B. die Eingabe eines Lösungswortes, dessen einzelne Bestandteile / Buchstaben /Ziffern über den Verlauf des Programms ausgestrahlt wurden, erfolgen. Hierdurch kann der Nachweis eines aktiv zuhörenden und alle Inhalte aufmerksam verfolgenden Teilnehmers erbracht werden. Hierfür kann der Teilnehmer belohnt oder authorisiert werden. Weiter kann die Ausführungsform genutzt werden um die Bewertung einer Sendung oder eines Beitrags durch z. B. Schulnoten durchzuführen. Darüber hinaus kann in einer weiteren bevorzugten Ausführungsform die Eingabe persönlicher Daten in Reaktion auf eine Erhebung von Nutzerdaten erfolgen oder auch die Eingabe eines Betrages erfolgen mit dem auf etwas gewettet werden soll, während z.B, ein Pferderennen übertragen wird. Zudem kann während der Ausstrahlung eines Programms die Übertragung einer SMS oder eines WAP-Links an den Teilnehmer am Endgerät 405 erfolgen, sofern dieser dies durch eine entsprechende Interaktion wünscht, oder sich durch die Erfüllung bestimmter Kriterien hierfür qualifiziert. Damit kann z.B. ein Produkt im Werbespot des radioähnlichen Teledienstes 420, das als interessant empfunden wird, beim Teilnehmer eine Reaktion in der Form auslösen, dass dieser z.B. "1" für "mehr Info" eingibt. Als Reaktion darauf kann der Teilehmer in dieser bevorzugten Ausführungsform eine SMS mit einem Link ins Internet auf die Website des Anbieters - oder eine SMS mit einer kostenlosen 0800-Infoline-Nummer erhalten. Weiter kann in dieser bevorzugten Ausführungsform der Teilnehmer einen im radioähnlichen Teledienst 420 vorgestellten Song, der dem Teilnehmer gefällt, z.B. durch Eingabe von "KAUFEN" oder "MERKEN" in einen Warenkorb übernehmen. Dieser Warenkorb kann auf dem Endgerät 405 gespeichert sein, oder zuvor auf dem PC des Anwenders für den radioähnlichen Teledienst 420 eingerichtet worden sein. Auf diese Weise könnte ein Hörbuch oder Buch, oder Album im radioähnlichen Teledienst 420 vorgestellt werden und dann direkt mit einem Klick auf der Tastatur des Telefons 405 bei einem Händler wie z.B. Amazon via Handy-Benutzerkonto bestellt werden.

Weiterhin kann der Festnetzserver 480 über die weiter oben bereits beschriebenen Funktionen der Software-Komponenten 407 auch die Endgeräte 405 veranlassen, aktiv zu einem bestimmten Zeitpunkt den Festnetzserver 480 zu kontaktieren, um eine entsprechende Übertragung von Telediensten zu empfangen. In dieser bevorzugten Ausführungsform wird der Festnetzserver 480 beispielsweise aufgrund eines registrierten Abonnements für zeitpunktabhängige Übertragung von Telediensten zu diesem jeweiligen Zeitpunkt über eine Verbindung 473 ein Endgerät 405 anrufen. Über das weiter oben beschriebene Identifikationsverfahren wird die Software-Komponente 407 am Endgerät 405 diesen Anruf des Festnetzservers 480 identifizieren, jedoch die entsprechende Verbindung nicht annehmen und stattdessen ein "Besetzt"-Zeichen in Reaktion auf die Identifikation des Anrufs vom Festnetzserver 480 initialisieren. In Reaktion auf die Identifikation dieses Anrufes wird jedoch das Endgerät 405 seinerseits einen Anruf an den Festnetzserver 480 initialisieren, sodass von Seiten des Endgerätes 405 eine Verbindung 473 zum Server 480 erzeugt wird.

Diese letztgenannte bevorzugte Ausführungsform ist insbesondere vorteilhaft, wenn z.B. im Falle von Sportübertragungen zu einem bestimmten Zeitpunkt die Live-Kommentierung eines Fußballspieles über Informations- bzw. Mehrwertdienstkomponenten, die mit dem Netzwerk 483 verbunden sind, bereitgestellt werden. Diese Übertragungen werden zu einem bestimmten Zeitpunkt starten, sodass zu diesem Startzeitpunkt der Festnetzserver 480 getriggert durch entsprechend hinterlegte Abonnementinformationen zunächst eine Verbindung zum Endgerät 405 anfragen wird und dadurch das Endgerät 405 veranlassen wird, seinerseits eine Verbindung zum Festnetzserver 480 so herzustellen, dass der Nutzer des Endgerätes 405 sich rechtzeitig zum Start dieser z.B. Live-Übertragung eines Fußballspiels auf den rundfunkähnlichen Teledienst schaltet, um diese Übertragung wahrnehmen zu können.

Somit ermöglicht diese Ausführungsform nicht nur eine kostengünstige Vermittlung zwischen verschiedenen Mobilfunkendgeräten 405 bzw. 420, sondern auch die kostengünstige Bereitstellung rundfunkähnlicher Teledienste auf Endgeräten, wie z.B. mobilen Telefonen, die grundsätzlich für den Empfang von Rundfunkprogrammen nicht ausgestattet sind. Die Bereitstellung dieser rundfunkähnlichen Teledienste wiederum kann dadurch, dass der Festnetzserver 480 das Endgerät 405 ausschließlich zu einer Verbindung in ein Festnetz 483 veranlasst, für den Nutzer des Endgerätes 405 kostenlos bzw. im Fall einer Flatrate sogar bezüglich der Kosten zeitunabhängig bereitstellen.

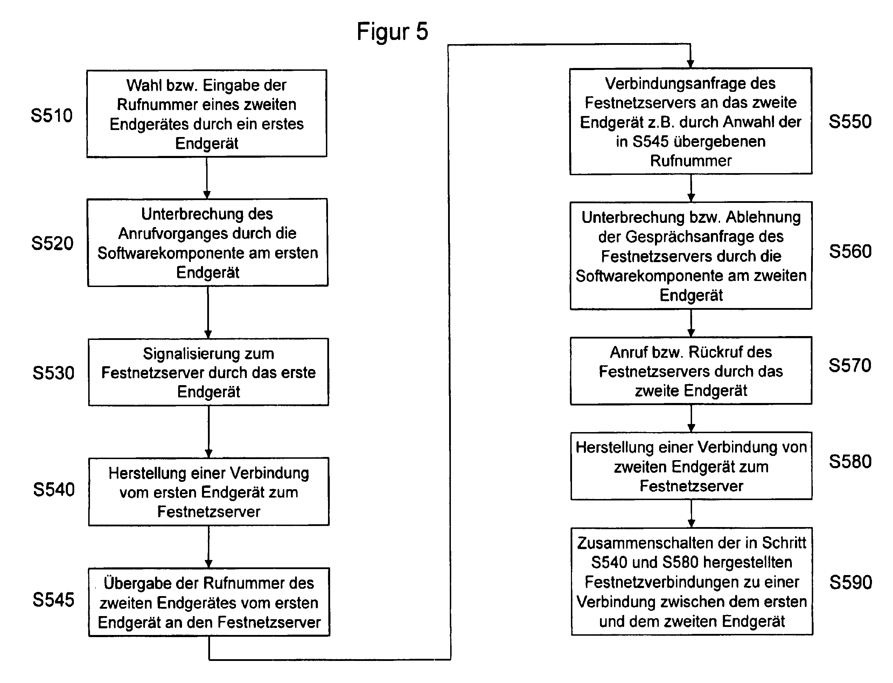

Fig. 5 zeigt zuletzt schematisch den Prozessablauf des gesprächsrichtenden Vermittlungsverfahrens, das durch den Festnetzserver 480 und die entsprechenden Software-Komponenten 423 bzw. 407 bereitgestellt wird. In Schritt 510 erfolgt die Wahl der Rufnummer von Endgerät 420 durch das Endgerät 405. In Schritt 520 wird die Software-Komponente 407 diesen Anruf unterbrechen. Im Hintergrund erfolgt nun in Schritt 530 die Signalisierung durch das erste Endgerät an den Festnetzservers 480 z.B. durch Anruf das Endgerät 405 am Festnetzserver oder auch alternativ durch Protokolle wie DTMF (Dual Tone MultiFrequency), USSD (Unstructured Supplementary Service Data) oder GPRS (General Packet Radio Service) oder andere vergleichbare Daten- und oder Kommunikationsprotokolle. Über den Mobilfunkanbieter A des Netzwerkes 410 erfolgt die Herstellung der Verbindung zum Festnetzserver 480 im Schritt 540. Übergabe der am Endgerät 405 eingegebenen Rufnummer des Endgerätes 420 durch das Endgerät 405 über die hergestellte Verbindung zum Festnetzserver 480 an den Festnetzserver 480. Über die am Festnetzserver 480 vorhandene C7/SS7-Interconnection-Fähigkeit wird ein Anruf an die von Gerät 405 übergebene Rufnummer zum Endgerät 420 vom Festnetzserver 480 an den Mobilfunkanbieter B des Netzwerkes 425 in Schritt 550 signalisiert. Dieser vom Mobilfunkanbieter B eines Endgerätes 420 weitergeleitete Anruf wird von der Software-Komponente 423 am Endgerät 420 in Schritt 560 unterbrochen bzw. abgelehnt. In Reaktion auf diese Unterbrechung bzw. die Identifikation des Anrufes von Festnetzserver 480 wird von Endgerät 420 in Schritt 570 der Rückruf des Festnetzservers 480 bzw. ein Anruf an den Festnetzserver 480 durch die auf dem Endgerät 120 installierte Software-Komponente 423 im Hintergrund initialisiert. Der Mobilfunkbetreiber B des Netzwerkes 125 wird darauf im Schritt 580 eine Verbindung zum Festnetzserver 480 herstellen. In Schritt 590 wird am Festnetzserver 480 eine Zusammenschaltung der in Schritt 540 und 580 hergestellten Verbindungen umgesetzt, sodass nach dem Schritt 590 ein Gespräch zwischen Endgerät 405 und 420 besteht.

## Patentansprüche

1. System zur gesprächsrichtenden Vermittlung von Telekommunikationsverbindungen zwischen mindesten zwei Telekommunikationsendgeräten, wobei die Telekommunikationsendgeräte jeweils in verschiedenen Telekommunikationsnetzen registriert sind, aufweisend
mindestens zwei Telekommunikationsendgeräte (405, 420), wobei jedes der mindestens zwei Telekommunikationsendgeräte über eine Software-Komponente (320) verfügt, die dafür eingerichtet ist, von einem ersten Telekommunikationsendgerät (405) ausgehende Gesprächsanfragen (170) so zu initialisieren, dass die Eingabe einer Zielrufnummer des zweiten Telekommunikationsendgerätes (420) die Software-Komponente aktiviert, die Software-Komponente in Reaktion auf die Aktivierung die eingegebene Rufnummer zumindest temporär speichert, eine ausgehende Gesprächsanfrage (470) an einen Festnetzserver (480) initialisiert und über die zum Festnetzserver hergestellte Telekommunikationsverbindung (473) die Zielrufnummer an den Festnetzserver übergibt, wobei die Software-Komponente weiter dafür eingerichtet ist, vom Festnetzserver aus initiierte Gesprächsanfragen (495) zu erkennen, in Antwort hierauf diese Gesprächsanfrage abzulehnen und selbst eine Gesprächsanfrage (497) an den Festnetzserver zu initialisieren;
wobei der Festnetzserver mindestens eine Switching-Komponente aufweist sowie Einrichtungen aufweist, die Interconnection-Funktionalität bereitstellen, sodass der Festnetzserver ein neutrales Telekommunikationsnetz (483) konstituiert und der Festnetzserver in der Lage ist, eingehende Gespräche aus Netzen anderer Telekommunikationsdienstleister (410, 425), die an von diesem Servern bereitgestellte Zielnummern gerichtet sind, zu terminieren und weiter in der Lage ist, Gespräche (495) an Zielnummern anderer Telekommunikationsdienstleister selbständig zu initiieren; und
softwareimplementierte Einrichtungen auf dem Festnetzserver (480), die so eingerichtet sind, dass die an dem Festnetzserver eingehende Gesprächsanfrage (470) des ersten Telekommunikationsendgerätes (405) hinsichtlich der Identität des anfragenden Telekommunikationsendgerätes analysiert wird und in Reaktion auf diese Identitätsanalyse eine Verbindung (473) zu dem ersten Telekommunikationsendgerät zugelassen und aufgebaut wird und auf Basis der Identitätsanalyse und der hergestellten Verbindung eine gewünschte Telekommunikationsverbindung (498) zu einem zweiten Telekommunikationsendgerät (420) herstellt wird, wobei die Switching-Komponente dafür eingerichtet ist, die bestehende Verbindung zum ersten Telekommunikationsendgerät, welche durch das erste Telekommunikationsendgerät initiiert wurde, mit einer weiteren Verbindung (497) zum zweiten Telekommunikationsendgerät, welche von dem zweiten Telekommunikationsendgerät in Antwort auf die Ablehnung einer Gesprächsanfrage (495) vom Festnetzserver initiiert wurde, zu koppeln, um dadurch eine direkte Kommunikation (498) zwischen dem ersten Telekommunikationsendgerät und dem zweiten Telekommunikationsendgerät über den Festnetzserver einzurichten.

2. System gemäß Anspruch 1, wobei die softwareimplementierten Einrichtungen weiter dafür eingerichtet sind die hergestellte Telekommunikationsverbindung (473) zum ersten Telekommunikationsendgerät (405) aufrecht zu erhalten und parallel eine Gesprächsanfrage (495) von dem Festnetzserver (480) über die übergebene Zielrufnummer an das zweite Telekommunikationsendgerät (420) zu initialisieren.

3. System gemäß Anspruch 2, wobei die Zielrufnummer an dem ersten Telekommunikationsendgerät (405) eingegeben wird und die Rufnummer die eines zweiten Telekommunikationsendgerätes (420) ist und im zweiten Telekommunikationsendgerät durch das Eintreffen einer Gesprächsanfrage (495) die Software-Komponente des zweiten Telekommunikationsendgerätes aktiviert wird, die Software-Komponente eine von dem Festnetzserver (480) eintreffende Gesprächanfrage identifiziert, in Reaktion auf die Identifikation die Verbindung ablehnt und in Reaktion auf die Identifikation und Ablehnung eine ausgehende Gesprächsanfrage (497) an den Festnetzserver initialisiert.

4. System gemäß Anspruch 3 wobei die softwareimplementierten Einrichtungen weiter dafür eingerichtet sind, die Verbindung zum ersten Telekommunikationsendgerät (405) aufrecht zu erhalten bis eine Gesprächsanfrage (497) des zweiten Telekommunikationsendgerätes (420) am Festnetzserver (480) eintrifft und wobei weiter die Switching-Komponente dafür eingerichtet ist in Reaktion auf das Herstellen einer Verbindung vom Festnetzserver zum zweiten Telekommunikationsendgerät die Verbindung zum ersten und zum zweiten Telekommunikationsendgerät so zusammenzuschalten das eine Telekommunikationsverbindung (498) zwischen dem ersten und dem zweiten Telekommunikationsendgerät über den Festnetzserver hergestellt wird.

5. System nach einem der Ansprüche 1-4 wobei die softwareimplementierten Einrichtungen weiter dafür eingerichtet sind die vom ersten Telekommunikationsendgerät (405) übergebene Rufnummer mit einer vom Festnetzserver (480) zugänglichen Liste von erlaubten und / oder verbotenen Liste von Rufnummern zu vergleichen, sodass die Gesprächsanfrage vom ersten Telekommunikationsendgerät durch den Festnetzserver abgelehnt wird, wenn die übergebene Rufnummer nicht zu der Liste erlaubter und / oder zu der Liste verbotener Rufnummern gehört.

6. System nach einem der Ansprüche 1-5 wobei die mindestens zwei Telekommunikationsendgeräte (405, 420) als mobile Telefone ausgeführt sind und die mindestens zwei mobilen Telefone jeweils in einem anderen Mobilfunknetz (410, 425) registriert sind.

7. System nach Anspruch 1 wobei das zweite Telekommunikationsendgerät (420) einen Medienservice bereitstellt und die softwareimplementierten Einrichtungen weiter dafür eingerichtet sind in Reaktion auf eine Gesprächsanfrage (470) des ersten Telekommunikationsendgerätes eine Verbindung zu dem gewünschten Medienservice (420) bereit zu stellen, sodass ein rundfunkähnlicher Teledienst (498) für das erste Telekommunikationsendgerät (405) bereitgestellt wird.

8. System nach Anspruch 7 wobei die softwareimplementierten Einrichtungen weiter dafür eingerichtet sind zu einem vorher festgelegten Zeitpunkt eine Gesprächsanfrage (495) an das erste Telekommunikationsendgerät (405) zu initialisieren, wobei weiter im ersten Telekommunikationsendgerät durch das Eintreffen der Gesprächsanfrage die Software-Komponente des ersten Telekommunikationsendgerätes aktiviert wird, die Software-Komponente die von dem Festnetzserver (480) eintreffende Gesprächanfrage identifiziert, in Reaktion auf die Identifikation die Verbindung ablehnt und in Reaktion auf die Identifikation und Ablehnung eine ausgehende Gesprächsanfrage (497) an den Festnetzserver initialisiert.

9. Ein Computer-implementiertes Verfahren zur gesprächsrichtenden Vermittlung von Telekommunikationsverbindungen zwischen mindesten zwei Telekommunikationsendgeräten, wobei die Telekommunikationsendgeräte jeweils in verschiedenen Telekommunikationsnetzen registriert sind, das Verfahren umfassend
initialisieren einer ausgehenden Gesprächsanfrage (170) von einem ersten Telekommunikationsendgeräte (405) zu mindestens einem zweiten Telekommunikationsendgerät (420), wobei durch die Eingabe der Zielrufnummer des zweiten Telekommunikationsendgerätes eine Software-Komponente (320) des ersten Telekommunikationsendgerät aktiviert wird, die Software-Komponente in Reaktion auf die Aktivierung die eingegebene Rufnummer zumindest temporär speichert, eine ausgehende Gesprächsanfrage (470) an einen Festnetzserver (480) initialisiert und über eine zum Festnetzserver hergestellte Telekommunikationsverbindung (473) die Zielrufnummer an den Festnetzserver übergibt;
analysieren der vom ersten Telekommunikationsendgerät (405) eingehenden Gesprächanfrage (470) hinsichtlich der Identität des anfragenden Telekommunikationsendgerätes an dem Festnetzserver (480), der mindestens eine Switching-Komponente aufweist sowie Einrichtungen aufweist, die Interconnection-Funktionalität bereitstellen, sodass der Festnetzserver ein neutrales Telekommunikationsnetz (483) konstituiert und der Festnetzserver in der Lage ist, eingehende Gespräche aus Netzen anderer Telekommunikationsdienstleister (410, 425), die an von diesem Servern bereitgestellte Zielnummern gerichtet sind, zu terminieren und weiter in der Lage ist, Gespräche (495) an Zielnummern anderer Telekommunikationsdienstleister selbständig zu initiieren;
zulassen und aufbauen einer Verbindung (473) vom Festnetzserver zum anfragenden ersten Telekommunikationsendgerät (405) in Reaktion auf die Identitätsanalyse;
herstellen einer gewünschten Telekommunikationsverbindung (498) zu einem zweiten Telekommunikationsendgerät (420) auf Basis der Identitätsanalyse und der hergestellten Verbindung zum ersten Telekommunikationsendgerät durch initialisieren einer Gesprächsanfrage (495) von dem Festnetzserver über die übergebene Zielrufnummer an das zweite Telekommunikationsendgerät (420), wobei im zweiten Telekommunikationsendgerät durch das Eintreffen der Gesprächsanfrage (495) die Software-Komponente (420) des zweiten Telekommunikationsendgerätes aktiviert wird, die Software-Komponente die vom Festnetzserver eintreffende Gesprächanfrage identifiziert, in Reaktion auf die Identifikation die Verbindung ablehnt und in Reaktion auf die Identifikation und Ablehnung eine ausgehende Gesprächsanfrage (497) an den Festnetzserver initialisiert;
aufrecht erhalten der Verbindung (473) zum ersten Telekommunikationsendgerät bis die Gesprächsanfrage (497) des zweiten Telekommunikationsendgerätes am Festnetzserver eintrifft, wobei die Switching-Komponente dafür eingerichtet ist in Reaktion auf das Herstellen einer Verbindung vom Festnetzserver zum zweiten Telekommunikationsendgerät die Verbindungen zum ersten und zum zweiten Telekommunikationsendgerät so zusammenzuschalten, dass eine Telekommunikationsverbindung (498) zwischen dem ersten und dem zweiten Telekommunikationsendgerät über den Festnetzserver hergestellt wird.

10. Verfahren gemäß Anspruch 9, weiter umfassend
aufrecht erhalten der hergestellten Telekommunikationsverbindung (473) zum ersten Telekommunikationsendgerät (405) und parallel initialisieren der Gesprächsanfrage (495) an das zweite Telekommunikationsendgerät (420).

11. Verfahren nach einem der Ansprüche 9 oder 10 weiter umfassend
vergleichen der vom ersten Telekommunikationsendgerät (405) übergebenen Rufnummer mit einer vom Festnetzserver (480) zugänglichen Liste von erlaubten und / oder verbotenen Liste von Rufnummern, sodass die Gesprächsanfrage (470) vom ersten Telekommunikationsendgerät durch den Festnetzserver abgelehnt wird, wenn die übergebene Rufnummer nicht zu der Liste erlaubter und / oder zu der Liste verbotener Rufnummern gehört.

12. Verfahren nach einem der Ansprüche 9-11 wobei die mindestens zwei Telekommunikationsendgeräte (405, 420) als mobile Telefone ausgeführt sind und die mindestens zwei mobilen Telefone jeweils in einem anderen Mobilfunknetz (410, 425) registriert sind.

13. Verfahren nach Anspruch 12 wobei das zweite Telekommunikationsendgerät (420) einen Medienservice bereitstellt und das Verfahren weiter umfasst
bereit stellen einer Verbindung (498) zu einem gewünschten Medienservice in Reaktion auf eine Gesprächsanfrage (470) des ersten Telekommunikationsendgerätes, sodass ein rundfunkähnlicher Teledienst für das erste Telekommunikationsendgerät bereitgestellt wird.

14. Verfahren nach Anspruch 13 weiter umfassend
initialisieren einer Gesprächsanfrage (495) zu einem vorher festgelegten Zeitpunkt an das erste Telekommunikationsendgerät (405), wobei weiter im ersten Telekommunikationsendgerät durch das Eintreffen der Gesprächsanfrage die Software-Komponente (320) des ersten Telekommunikationsendgerätes aktiviert wird, die Software-Komponente die von dem Festnetzserver (480) eintreffende Gesprächanfrage identifiziert, in Reaktion auf die Identifikation die Verbindung ablehnt und in Reaktion auf die Identifikation und Ablehnung eine ausgehende Gesprächsanfrage (497) an den Festnetzserver initialisiert.

15. Computerlesbares Speichermedium, auf dem computerlesbare Instruktionen gespeichert sind, die, wenn sie von einem Computer ausgeführt werden, dafür eingerichtet sind, die Schritte jedes der Verfahren 9 bis 14 auszuführen.

## Claims

1. System for the call-directing switching of telecommunication links between at least two telecommunication terminals, with the telecommunication terminals each being registered in different telecommunication networks, comprising:
at least two telecommunication terminals (405, 420), each of the at least two telecommunication terminals including a software component (320) which is adapted to initialize call requests (170) originating at the telecommunication terminal (405) in such a way that the input of a destination call number of the second telecommunication terminal (420) activates the software component, the software component stores at least temporarily the inputted call number in response to the activation, initializes an outgoing call request (470) to a fixed network server (480) and transfers the destination call number to the fixed networker server via the telecommunication link (473) established to the fixed network server, wherein the software component is further adapted to recognize call requests (495) initiated at the fixed network server, to refuse said call request in response thereto and to initialize itself a call request (497) to the fixed network server;
wherein the fixed network server includes at least one switching component, and also includes units that provide interconnection functionality, so that the fixed network server constitutes a neutral telecommunication network (483) and the fixed network server is capable of terminating incoming calls from networks of other telecommunication service providers (410, 425), which are directed to destination numbers provided by this server, and further being capable of independently initiating calls (495) to destination numbers of other telecommunication service providers; and
software-implemented units on the fixed network server (480), which are adapted in such a way that the call request (470) received by the fixed network server from the first telecommunication terminal (405) is analyzed with respect to the identity of the requesting telecommunication terminal and that a connection (473) to the first telecommunication terminal is permitted and established in response to this identity analysis, and a desired telecommunication link (498) to a second telecommunication terminal (420) is established on the basis of the identity analysis and the established connection, wherein the switching component is adapted to interconnect the existing connection to the first telecommunication terminal which was initiated by the first telecommunication terminal, to a further connection (497) to the second telecommunication terminal which was initiated by the second telecommunication terminal in response to the refusal of a call request (495) from the fixed network server so as to provide a direct communication (498) between the first telecommunication terminal and the second telecommunication terminal via the fixed network server.

2. System according to claim 1, wherein the software-implemented units are further adapted to maintain the established telecommunication link (473) to the first telecommunication terminal (405) and initialize in parallel, by means of the transferred destination call number, a call request (495) from the fixed network server (480) to the second telecommunication terminal (420).

3. System according to claim 2, wherein the destination call number is inputted at the first telecommunication terminal (405) and the call number is the number of a second telecommunication terminal (420) and the software component of the second telecommunication terminal is activated in the second telecommunication terminal by receiving a call request (495), the software component identifies a call request received from the fixed network server (480), refuses the connection in response to the identification, and initializes an outgoing call request (497) to the fixed network server in response to the identification and refusal.

4. System according to claim 3, wherein the software-implemented units are further adapted to maintain the connection to the first telecommunication terminal (405) until a call request (497) of the second telecommunication terminal (420) is received on the fixed network server (480), and wherein further the switching component is adapted to interconnect in response to the establishment of a connection from the fixed network server to the second telecommunication terminal the connection to the first and to the second telecommunication terminal in such a way that a telecommunication link (498) between the first and the second telecommunication terminal is established via the fixed network server.

5. System according to one of claims 1 to 4, wherein the software-implemented units are further adapted to compare the call number transferred by the first telecommunication terminal (405) with a list accessible by the fixed network server (480) of permitted and/or prohibited call numbers, so that the call request from the first telecommunication terminal is refused by the fixed network server if the transferred call number does not belong to the list of permitted call numbers and/or belongs to the list of prohibited numbers.

6. System according to one of claims 1 to 5, wherein the at least two telecommunication terminals (405, 420) are designed as mobile phones and the at least two mobile phones are each registered in another mobile radio network (410, 425).

7. System according to claim 1, wherein the second telecommunication terminal (420) provides a media service, and the software-implemented units are further adapted to provide a connection to the desired media service (420) in response to a call request (470) of the first telecommunication terminal, so that a broadcast-like teleservice (498) is provided for the first telecommunication terminal (405).

8. System according to claim 7, wherein the software-implemented units are further adapted to initialize a call request (495) to the first telecommunication terminal (405) at a previously fixed time, wherein further the software component of the first telecommunication terminal is activated in the first telecommunication terminal by receiving the call request, the software component identifies the call request received from the fixed network server (480), refuses the connection in response to the identification and initializes an outgoing call request (497) to the fixed network server in response to the identification and refusal.

9. A computer-implemented method for the call-directing switching of telecommunication links between at least two telecommunication terminals, with the telecommunication terminals each being registered in different telecommunication networks, the method comprising:
initializing an outgoing call request (170) from a first telecommunication terminal (405) to at least one second telecommunication terminal (420), wherein a software component (320) of the first telecommunication terminal is activated by inputting the destination call number of the second telecommunication terminal, the software component stores the inputted call number at least temporarily in response to the activation, initializes an outgoing call request (470) to a fixed network server (480) and transfers the destination call number to the fixed network server via a telecommunication link (473) established to the fixed network server;
analyzing the incoming call request (470) from the first telecommunication terminal (405) with respect to the identity of the requesting telecommunication terminal at the fixed network server (480) which includes at least one switching component, and also including units that provide interconnection functionality, so that the fixed network server constitutes a neutral telecommunication network (483) and the fixed network server is capable of terminating incoming calls from networks of other telecommunication service providers (410, 425), which are directed to destination numbers provided by this server, and further being capable of independently initiating calls (495) to destination numbers of other telecommunication service providers;
permitting and establishing a connection (473) from the fixed network server to the requesting first telecommunication terminal (405) in response to the identity analysis;
establishing a desired telecommunication link (498) to a second telecommunication terminal (420) on the basis of the identity analysis and the established connection to the first telecommunication terminal by initializing a call request (495) from the fixed network server via the transferred destination call number to the second telecommunication terminal (420), wherein in the second telecommunication terminal the software component (420) of the second telecommunication terminal is activated by receiving the call request (495), the software component identifies the call request received from the fixed network server, refuses the connection in response to the identification and initializes an outgoing call request (497) to the fixed network server in response to the identification and refusal;
maintaining the connection (473) to the first telecommunication terminal until the call request (497) of the second telecommunication terminal is received on the fixed network server, wherein the switching component is adapted to interconnect in response to the establishment of a connection from the fixed network server to the second telecommunication terminal the connections to the first and to the second telecommunication terminal in such a way that a telecommunication link (498) between the first and the second telecommunication terminal is established via the fixed network server.

10. Method according to claim 9, further comprising:
maintaining the established telecommunication link (473) to the first telecommunication terminal (405) and initializing in parallel the call request (495) to the second telecommunication terminal (420).

11. Method according to one of claims 9 or 10, further comprising:
comparing the call number transferred by the first telecommunication terminal (405) with a list accessible by the fixed network server (480) of permitted and/or prohibited call numbers, so that the call request (470) from the first telecommunication terminal is refused by the fixed network server if the transferred call number does not belong to the list of permitted call numbers and/or belongs to the list of prohibited numbers.

12. Method according to one of claims 9 to 11, wherein the at least two telecommunication terminals (405, 420) are designed as mobile phones and the at least two mobile phones are each registered in another mobile radio network (410, 425).

13. Method according to claim 12, wherein the second telecommunication terminal (420) provides a media service, and the method further comprises:
providing a connection (498) to a desired media service in response to a call request (470) of the first telecommunication terminal, so that a broadcast-like teleservice is provided for the first telecommunication terminal.

14. Method according to claim 13, further comprising:
initializing a call request (495) to the first telecommunication terminal (405) at a previously fixed time, wherein further the software component (320) of the first telecommunication terminal is activated in the first telecommunication terminal by receiving the call request, the software component identifies the call request received from the fixed network server (480), refuses the connection in response to the identification and initializes an outgoing call request (497) to the fixed network server in response to the identification and refusal.

15. Computer-readable storage medium on which computer-readable instructions are stored, which, if they are executed by a computer, are adapted to execute the steps of each of methods 9 to 14.

## Revendications

1. Système de commutation à orientation des appels pour des liaisons de télécommunication entre au moins deux terminaux de télécommunication, étant précisé que les terminaux de télécommunication respectifs sont enregistrés dans des réseaux de télécommunication différents, comportant
au moins deux terminaux de télécommunication (405, 420), étant précisé que chacun des deux terminaux de télécommunication, ou plus, dispose d'un composant logiciel (320) qui est conçu pour déclencher les demandes d'appel (170) provenant d'un premier terminal de télécommunication (405) de telle sorte que l'entrée d'un numéro d'appel de destination du second terminal de télécommunication (420) active le composant logiciel, que le composant logiciel, en réaction à l'activation, mette en mémoire au moins temporairement le numéro d'appel entré, déclenche une demande d'appel sortante (470) adressée à un serveur de réseau fixe (480) et, par l'intermédiaire de la liaison de télécommunication (473) établie avec le serveur de réseau fixe, transmette le numéro d'appel de destination à celui-ci, étant précisé que le composant logiciel est également conçu pour reconnaître des demandes d'appel (495) lancées à partir du serveur de réseau fixe, pour rejeter, en guise de réponse, cette demande d'appel, et pour déclencher lui-même une demande d'appel (497) adressée au serveur de réseau fixe ;
étant précisé que le serveur de réseau fixe comporte au moins un composant de commutation ainsi que des dispositifs qui fournissent une fonctionnalité d'interconnexion, de sorte que le serveur de réseau fixe constitue un réseau de télécommunication neutre (483) et que le serveur de réseau fixe est en mesure de rediriger les appels entrants provenant de réseaux d'autres opérateurs de télécommunication (410, 425) qui sont destinés à des numéros de destination fournis pas ce serveur, et est également en mesure de lancer de manière autonome des appels (495) vers des numéros de destination d'autres opérateurs de télécommunication ; et
des dispositifs implémentés par logiciel, sur le serveur de réseau fixe (480), qui sont conçus pour que la demande d'appel (470) du premier terminal de télécommunication (405) qui provient du serveur de réseau fixe soit analysée au sujet de l'identité du terminal de télécommunication demandeur et qu'en réaction à cette analyse d'identité une liaison (473) avec le premier terminal de télécommunication soit autorisée et établie et que sur la base de l'analyse d'identité et de la liaison établie, une liaison de télécommunication souhaitée (498) avec un second terminal de télécommunication (420) soit établie, étant précisé que le composant de commutation est conçu pour coupler la liaison qui existe avec le premier terminal de télécommunication et qui a été lancée par celui-ci, avec une autre liaison (497) avec le second terminal de télécommunication qui a été lancée par celui-ci en réponse au rejet d'une demande d'appel (495) du serveur de réseau fixe, afin d'installer ainsi une communication directe (498) entre le premier terminal de télécommunication et le second terminal de télécommunication par l'intermédiaire du serveur de réseau fixe.

2. Système selon la revendication 1, étant précisé que les dispositifs implémentés par logiciel sont également conçus pour maintenir la liaison de télécommunication établie (473) avec le premier terminal de télécommunication (405) et pour lancer parallèlement une demande d'appel (495) du serveur de réseau fixe (480), par l'intermédiaire du numéro d'appel de destination transmis, au second terminal de télécommunication (420).

3. Système selon la revendication 2, étant précisé que le numéro d'appel de destination est entré au niveau du premier terminal de télécommunication (405) et que le numéro d'appel est celui d'un second terminal de télécommunication (420) et que dans le second terminal de télécommunication, le composant logiciel de celui-ci est activé par l'arrivée d'une demande d'appel (495), le composant logiciel identifie une demande d'appel qui arrive à partir du serveur de réseau fixe (480), rejette la liaison en réaction à l'identification, et en réaction à l'identification et au rejet, déclenche une demande d'appel sortante (497) au serveur de réseau fixe.

4. Système selon la revendication 3, étant précisé que les dispositifs implémentés par logiciel sont également conçus pour que la liaison avec le premier terminal de télécommunication (405) soit maintenue jusqu'à ce qu'une demande d'appel (497) du second terminal de télécommunication (420) arrive au serveur de réseau fixe (480), et étant précisé que le composant de commutation est également conçu pour interconnecter la liaison avec les premier et second terminaux de télécommunication, en réaction à l'établissement d'une liaison du serveur de réseau fixe avec le second terminal de télécommunication, de telle sorte qu'une liaison de télécommunication (498) soit établie entre les premier et second terminaux de télécommunication par l'intermédiaire du serveur de réseau fixe.

5. Système selon l'une des revendications 1 à 4, étant précisé que les dispositifs implémentés par logiciel sont également conçus pour comparer le numéro d'appel transmis par le premier terminal de télécommunication (405) à une liste, à laquelle le serveur de réseau fixe (480) a accès, de numéros d'appel autorisés et/ou interdits, de sorte que la demande d'appel du premier terminal de télécommunication est rejetée par le serveur de réseau fixe si le numéro d'appel transmis n'appartient pas à la liste de numéros d'appel autorisés et/ou à la liste de numéros d'appel interdits.

6. Système selon l'une des revendications 1 à 5, étant précisé que les deux terminaux de télécommunication (405, 420), ou plus, sont conçus comme des téléphones mobiles et que les deux téléphones mobiles, ou plus, sont enregistrés chacun dans un autre réseau de téléphonie mobile (410, 425).

7. Système selon la revendication 1, étant précisé que le second terminal de télécommunication (420) fournit un service médias et que les dispositifs implémentés sur logiciel sont également conçus pour fournir, en réaction à une demande d'appel (470) du premier terminal de télécommunication, une liaison avec le service médias souhaité (420), de sorte qu'un téléservice du type radio (498) est fourni pour le premier terminal de télécommunication (405).

8. Système selon la revendication 7, étant précisé que les dispositifs implémentés par logiciel sont également conçus pour déclencher une demande d'appel (495) à un premier appareil de télécommunication (405), à un moment fixé préalablement, étant précisé que dans le premier terminal de télécommunication, le composant logiciel de celui-ci est également activé par l'arrivée de la demande d'appel, que le composant logiciel identifie la demande d'appel qui arrive à partir du serveur de réseau fixe (480), rejette la liaison en réaction à l'identification, et, en réaction à l'identification et au rejet, déclenche une demande d'appel sortante (497) au serveur de réseau fixe.

9. Procédé implémenté sur ordinateur pour la commutation à orientation des appels pour des liaisons de télécommunication entre au moins deux terminaux de télécommunication, le procédé comprenant
le déclenchement d'une demande d'appel sortante (170) d'un premier terminal de télécommunication (405) vers au moins un second terminal de télécommunication (420), étant précisé que grâce à l'entrée du numéro d'appel de destination du second terminal de télécommunication, un composant logiciel (320) du premier terminal de télécommunication est activé, que le composant logiciel, en réaction à l'activation, met en mémoire au moins temporairement le numéro d'appel entré, déclenche une demande d'appel sortante (470) adressée à un serveur de réseau fixe (480) et, par l'intermédiaire d'une liaison de télécommunication (473) établie avec le serveur de réseau fixe, transmet le numéro d'appel de destination à celui-ci ;
l'analyse de la demande d'appel (470) provenant du premier terminal de télécommunication (405) au sujet de l'identité du terminal de télécommunication demandeur, au niveau du serveur de réseau fixe (480) qui comporte au moins un composant de commutation ainsi que des dispositifs qui fournissent une fonctionnalité d'interconnexion, de sorte que le serveur de réseau fixe constitue un réseau de télécommunication neutre (483) et que le serveur de réseau fixe est en mesure de rediriger les appels entrants provenant de réseaux d'autres opérateurs de télécommunication (410, 425) qui sont destinés à des numéros de destination fournis pas ce serveur, et est également en mesure de lancer de manière autonome des appels (495) vers des numéros de destination d'autres opérateurs de télécommunication ;
l'autorisation et l'établissement d'une liaison (473) du serveur de réseau fixe vers le premier terminal de télécommunication (405) en réaction à l'analyse d'identité ;
l'établissement d'une liaison de télécommunication souhaitée (498) avec un second terminal de télécommunication (420) sur la base de l'analyse d'identité et de la liaison établie avec le premier terminal de télécommunication, grâce au déclenchement d'une demande d'appel (495) du serveur de réseau fixe, par l'intermédiaire du numéro d'appel de destination transmis, au second terminal de télécommunication (420), étant précisé que dans le second terminal de télécommunication, le composant logiciel (420) de celui-ci est activé par l'arrivée de la demande d'appel (495), que le composant logiciel identifie la demande d'appel qui arrive à partir du serveur de réseau fixe, rejette la liaison en réaction à l'identification, et, en réaction à l'identification et au rejet, déclenche une demande d'appel sortante (497) au serveur de réseau fixe ;
le maintien de la liaison (473) avec le premier terminal de télécommunication jusqu'à ce qu'une demande d'appel (497) du second terminal de télécommunication arrive au serveur de réseau fixe (480), étant précisé que le composant de commutation est conçu pour interconnecter les liaisons avec les premier et second terminaux de télécommunication, en réaction à l'établissement d'une liaison du serveur de réseau fixe avec le second terminal de télécommunication, de telle sorte qu'une liaison de télécommunication (498) soit établie entre les premier et second terminaux de télécommunication par l'intermédiaire du serveur de réseau fixe.

10. Procédé selon la revendication 9, comprenant par ailleurs le maintien de la liaison de télécommunication établie (473) avec le premier terminal de télécommunication (405), et le déclenchement parallèle de la demande d'appel (495) au second terminal de télécommunication (420).

11. Procédé selon l'une des revendications 9 à 10, comprenant par ailleurs la comparaison du numéro d'appel transmis par le premier terminal de télécommunication (405) avec une liste, à laquelle le serveur de réseau fixe (480) a accès, de numéros d'appel autorisés et/ou interdits, de sorte que la demande d'appel (470) du premier terminal de télécommunication est rejetée par le serveur de réseau fixe si le numéro d'appel transmis n'appartient pas à la liste de numéros d'appel autorisés et/ou à la liste de numéros d'appel interdits.

12. Procédé selon l'une des revendications 9 à 11, étant précisé que les deux terminaux de télécommunication (405, 420), ou plus, sont conçus comme des téléphones mobiles et que les deux téléphones mobiles, ou plus, sont enregistrés chacun dans un autre réseau de téléphonie mobile (410, 425).

13. Procédé selon la revendication 12, étant précisé que le second terminal de télécommunication (420) fournit un service médias et que le procédé comprend par ailleurs
la fourniture d'une liaison (498) avec un service médias souhaité, en réaction à une demande d'appel (470) du premier terminal de télécommunication, de sorte qu'un téléservice du type radio est fourni pour le premier terminal de télécommunication.

14. Procédé selon la revendication 13, comprenant par ailleurs le déclenchement d'une demande d'appel (495), à un moment fixé préalablement, au premier terminal de télécommunication (405), étant précisé que dans le premier terminal de télécommunication, le composant logiciel (320) de celui-ci est également activé par l'arrivée de la demande d'appel, que le composant logiciel identifie la demande d'appel qui arrive à partir du serveur de réseau fixe (480), rejette la liaison en réaction à l'identification, et, en réaction à l'identification et au rejet, déclenche une demande d'appel sortante (497) au serveur de réseau fixe.

15. Support de mémoire lisible par ordinateur sur lequel sont stockées des instructions lisibles par ordinateur qui, lorsqu'elles sont exécutées par un ordinateur, sont conçues pour exécuter les étapes de chacun des procédés 9 à 14.
